# EUROPEAN PATENT SPECIFICATION

(11) **EP 3 025 838 B1**
(45) Date of publication and mention of the grant of the patent: **01.08.2018**
(21) Application number: 15194640.7
(22) Date of filing: 15.11.2015
(51) Int. Cl.: B29C 43/18, B29C 43/50, B29C 43/36, B29C 43/32, B29C 43/56, B29L 31/34

(54) **MOLDED ARTICLE PRODUCTION SYSTEM AND MOLDED ARTICLE PRODUCTION METHOD**
SYSTEM UND VERFAHREN ZUM PRESSFORMEN EINES ARTIKELS
SYSTÈME DE PRODUCTION D'ARTICLE MOULÉ ET PROCÉDÉ DE PRODUCTION D'ARTICLE MOULÉ

(30) Priority: 28.11.2014 JP 2014242567
(43) Date of publication of application: 01.06.2016
(73) Proprietor: Towa Corporation, Kyoto 601-8105 (JP)
(72) Inventor: Taka, Takeaki, Kyoto, Kyoto 601-8105 (JP); Onishi, Yohei, Kyoto, Kyoto 601-8105 (JP); Hirata, Yusuke, Kyoto, Kyoto 601-8105 (JP)
(74) Representative: Ludewigt, Christoph

(56) References cited:
- EP-A1- 2 457 710
- EP-A2- 0 162 428
- WO-A1-2009/078347
- JP-A- 2006 156 796
- JP-A- 2013 247 315

## Description

### TECHNICAL FIELD

The present invention relates to a molded article production system and molded article production method used in the process of producing a molded article which includes a cured resin, by curing a fluid resin filling the cavity of a mold to form the cured resin.

### BACKGROUND ART

A resin sealing and molding system, which is one type of the molded article production system, has a mold composed of upper and lower molds facing each other within which the cavity (i.e. the space for molding a cured resin) is formed. In a conventionally proposed resin sealing and molding system, the cavity is composed of two kinds of members, i.e. the bottom member for forming the mold surface of the inner bottom portion of the cavity (inner bottom surface) and the circumferential member (frame member) for forming the mold surface of the circumferential portion of the cavity (inner circumferential surface). (See Patent Literature 1 for an example.)

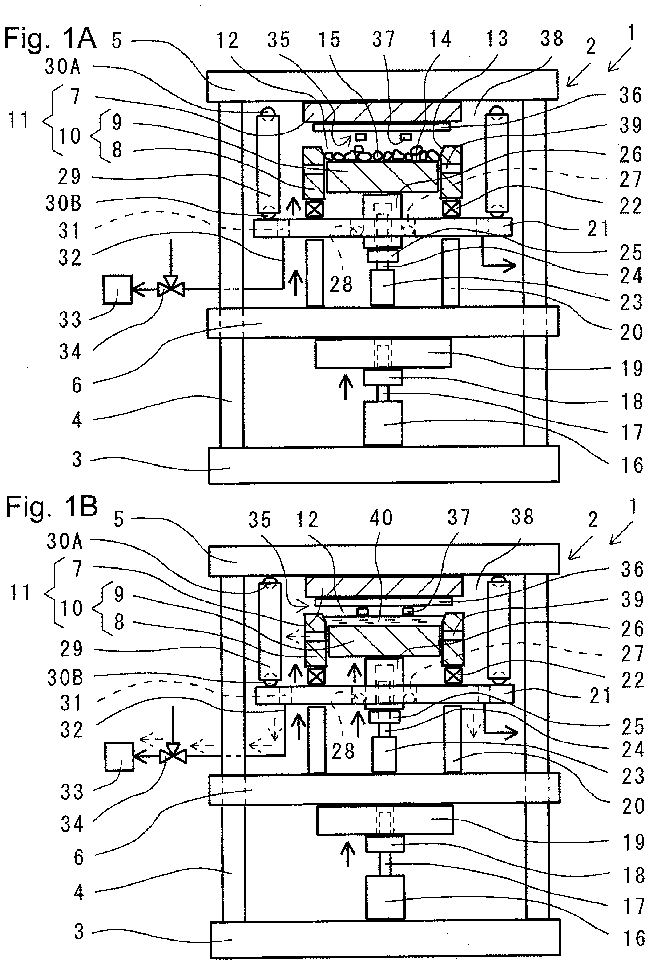

The following resin sealing and molding system is disclosed in Patent Literature 1 (see Claim 1 and Fig. 1):
A resin sealing and molding system, characterized by:
a) an upper mold having a lower surface on which a substrate with an electronic part mounted can be held; and
b) a lower mold arranged opposite to the upper mold, having:
   b1) a frame member placed on a pressing member with an elastic member interposed therebetween, the pressing member configured to be vertically driven by a first driving mechanism; and
   b2) a bottom member configured to be vertically driven in a slidable manner within the frame member by a second driving mechanism.

### CITATION LIST

### PATENT LITERATURE

Patent Literature 1: JP 2013-247315 A.
Further molding devices are known from WO2009/078347 A1, EP 0162428 A2, EP 2457710 A1, JP 2006156796 A.

### SUMMARY OF INVENTION

### TECHNICAL PROBLEM

According to the description of Patent Literature 1, the frame member and the bottom member are individually driven by two separate driving mechanisms. Such an invention described in Patent Literature 1 still has room for improvement in respect to the configuration for performing the resin molding by separately moving the frame member and the bottom member.

### SOLUTION TO PROBLEM

The objectives of the invention are achieved by the production systems according to the appended claims 1 and 2 as well as the production methods according to claims 7 and 8. Preferred embodiments are disclosed in the dependent claims. The first aspect of the molded article production system according to the present invention is a molded article production system including: a mold having at least a lower mold and an upper mold facing the lower mold; a cavity provided in the lower mold; a bottom member having an inner bottom surface forming the bottom surface of the cavity; a circumferential member having an inner circumferential surface forming the side surface of the cavity; and a mold-driving mechanism provided for opening and closing the mold, the system configured to produce a molded article including a cured resin formed by curing a fluid resin filling the cavity while holding the mold in the closed state, and the system further including: a lower base; a support member vertically provided on the lower base; an upper base provided in the upper portion of the support member and facing the lower base; an elevating platen mounted on the middle portion of the support member in a vertically moveable manner; a first driving mechanism included in the mold-driving mechanism and attached to the lower base; a second driving mechanism included in the mold-driving mechanism and attached to the elevating platen; a main connecting member connecting the first driving mechanism and the elevating platen; a first auxiliary connecting member connected to the circumferential member; and a second auxiliary connecting member connected to the bottom member, wherein: the upper mold is attached to the upper base; the first auxiliary connecting member is connected to the elevating platen; the second auxiliary connecting member is connected to the second driving mechanism; the circumferential member is vertically driven by the elevating platen which is vertically driven by the first driving mechanism; and the bottom member is vertically driven by the second driving mechanism.

The second aspect of the molded article production system according to the present invention is a molded article production system including: a mold having at least a lower mold and an upper mold facing the lower mold; a cavity provided in the lower mold; a bottom member having an inner bottom surface forming the bottom surface of the cavity; a circumferential member having an inner circumferential surface forming the side surface of the cavity; and a mold-driving mechanism provided for opening and closing the mold, the system configured to produce a molded article including a cured resin formed by curing a fluid resin filling the cavity while holding the mold in the closed state, and the system further including: a lower base; a support member vertically provided on the lower base; an upper base provided in the upper portion of the support member and facing the lower base; an elevating platen mounted on the middle portion of the support member in a vertically moveable manner; a first driving mechanism included in the mold-driving mechanism and attached to the lower base; a second driving mechanism included in the mold-driving mechanism and attached to the elevating platen; a main connecting member connecting the first driving mechanism and the elevating platen; a first auxiliary connecting member connected to the circumferential member; and a second auxiliary connecting member connected to the bottom member, wherein: the upper mold is attached to the upper base; the first auxiliary connecting member is connected to the second driving mechanism; the second auxiliary connecting member is connected to the elevating platen; the bottom member is vertically driven by the elevating platen which is vertically driven by the first driving mechanism; and the circumferential member is vertically driven by the second driving mechanism.

In the molded article production system according to the present invention, the previously described molded article production system further includes: a communicating hole provided in the lower mold, for allowing a mold surface forming the cavity to communicate with an external space outside the lower mold; and an opening formed by the communicating hole on the mold surface forming the cavity.

In one mode of the molded article production system according to the present invention, the previously described molded article production system is further characterized in that: the communicating hole is provided in the circumferential member; and the communicating hole is provided at a position where, after a gap begins to be formed between the mold surface on the circumferential member and the cured resin, the communicating hole allows the gap to communicate with the external space.

In the molded article production system according to the present invention, the previously described molded article production system is further characterized in that: the communicating hole is provided in a communicating member consisting of at least one of the circumferential member and the bottom member; the lower mold is provided with a pillar-shaped member inserted in the communicating hole in a longitudinally movable fashion, a top surface formed on the pillar-shaped member and configured to fit in the opening, and a widened portion formed in the communicating hole and extending toward the external space from a position receded from the opening along a communicating direction which is the extending direction of the communicating hole, the widened portion including the cross-sectional shape of the pillar-shaped member on a planer view and having a portion larger than that cross-sectional shape; the top surface closes the opening when the pillar-shaped member is advanced toward the cavity until the top surface reaches the opening; and the communicating hole including the opening and the widened portion communicates with the external space when the pillar-shaped member is retracted in the communicating direction.

In one mode of the molded article production system according to the present invention, the previously described molded article production system is further characterized in that: a plurality of molds is provided; the first auxiliary connecting member is connected to the circumferential member of each of the plurality of molds; and the second auxiliary connecting member is connected to the bottom member of each of the plurality of molds.

In one mode of the molded article production system according to the present invention, the previously described molded article production system further includes: an ambient-air shield member provided between the upper base and the first auxiliary connecting member so that a space which minimally includes the cavity becomes a closed space shielded from ambient air; at least one seal member provided between the upper base and the first auxiliary connecting member; and a depressurizing means connected to the closed space, for depressurizing the closed space.

In one mode of the molded article production system according to the present invention, the previously described molded article production system further includes: a material-receiving module for receiving a resin material which is a raw material for a fluid resin; and at least one molding module having at least the mold and the mold-driving mechanism, wherein the molding module is attachable to and detachable from the material-receiving module, and the molding module is attachable to and detachable from another molding module.

The first aspect of the molded article production method according to the present invention is a molded article production method for producing a molded article including a cured resin, using a molded article production system including: a mold having at least a lower mold and an upper mold facing the lower mold; a cavity provided in the lower mold; a bottom member having an inner bottom surface forming the bottom surface of the cavity; a circumferential member having an inner circumferential surface forming the side surface of the cavity; and a mold-driving mechanism provided for opening and closing the mold, the method including the processes of filling the cavity with a fluid resin, closing the mold, and forming the cured resin by curing the fluid resin in the cavity while holding the mold in the closed state, and the method further including the processes of: elevating both the circumferential member connected to a first auxiliary connecting member and the bottom member connected to a second auxiliary connecting member; bringing the circumferential member into contact with a member present on the upper mold and further elevating the bottom member; forming the cavity by stopping the bottom member at a predetermined position; detaching the outer circumferential surface of the cured resin from the inner circumferential surface of the circumferential member by lowering the circumferential member while the top surface of the cured resin is held by the inner bottom surface of the bottom member, after the process of molding the cured resin; detaching the top surface of the cured resin from the inner bottom surface of the bottom member by lowering the bottom member while the outer circumferential surface of the cured resin is held by the inner circumferential surface of the circumferential member, after the process of molding the cured resin; lowering both the circumferential member and the bottom member; and removing the molded article, wherein: the circumferential member connected to an elevating platen via the first auxiliary connecting member is elevated or lowered by vertically driving the elevating platen via a main connecting member by means of a first driving mechanism provided in a lower base included in the molded article production system; and the bottom member connected to a second driving mechanism via the second auxiliary connecting member is elevated or lowered by means of a second driving mechanism provided in the elevating platen.

The second aspect of the molded article production method according to the present invention is a molded article production method for producing a molded article including a cured resin, using a molded article production system including: a mold having at least a lower mold and an upper mold facing the lower mold; a cavity provided in the lower mold; a bottom member having an inner bottom surface forming the bottom surface of the cavity; a circumferential member having an inner circumferential surface forming the side surface of the cavity; and a mold-driving mechanism provided for opening and closing the mold, the method including the processes of filling the cavity with a fluid resin, closing the mold, and forming the cured resin by curing the fluid resin in the cavity while holding the mold in the closed state, and the method further including the processes of: elevating both the circumferential member connected to a first auxiliary connecting member and the bottom member connected to a second auxiliary connecting member; bringing the circumferential member into contact with a member present on the upper mold and further elevating the bottom member; forming the cavity by stopping the bottom member at a predetermined position; detaching the outer circumferential surface of the cured resin from the inner circumferential surface of the circumferential member by lowering the circumferential member while the top surface of the cured resin is held by the inner bottom surface of the bottom member, after the process of molding the cured resin; detaching the top surface of the cured resin from the inner bottom surface of the bottom member by lowering the bottom member while the outer circumferential surface of the cured resin is held by the inner circumferential surface of the circumferential member, after the process of molding the cured resin; lowering both the circumferential member and the bottom member; and removing the molded article, wherein: the bottom member connected to an elevating platen via the second auxiliary connecting member is elevated or lowered by vertically driving the elevating platen via a main connecting member by means of a first driving mechanism provided in a lower base included in the molded article production system; and the circumferential member connected to a second driving mechanism via the first auxiliary connecting member is elevated or lowered by means of a second driving mechanism provided in the elevating platen.

In one mode of the molded article production method according to the present invention, the previously described molded article production method further includes the process of making the surface of the cured resin communicate with an external space outside the lower mold, after the process of molding the cured resin, using a communicating hole provided in the lower mold for allowing a mold surface forming the cavity to communicate with the external space, through an opening of the communicating hole provided on the mold surface forming the cavity.

In one mode of the molded article production method according to the present invention, the previously described molded article production method is further characterized in that: the communicating hole is provided at a position where, after a gap begins to be formed between the mold surface on the circumferential member and the cured resin, the communicating hole allows the gap to communicate with the external space; and the process of making the surface of the cured resin communicate with the external space is performed in the process of detaching the top surface of the cured resin.

In one mode of the molded article production method according to the present invention, the previously described molded article production method is further characterized in that: the communicating hole is provided in a communicating member consisting of at least one of the circumferential member and the bottom member; the lower mold is provided with a pillar-shaped member inserted into the communicating hole in a longitudinally movable fashion, a top surface formed on the pillar-shaped member and configured to fit in the opening, and a widened portion formed in the communicating hole and extending toward the external space from a position receded from the opening along a communicating direction which is the extending direction of the communicating hole, the widened portion including the cross-sectional shape of the pillar-shaped member on a planer view and having a portion larger than that cross-sectional shape; the process of closing the opening by means of the top surface by advancing the pillar-shaped member toward the cavity until the top surface reaches the opening is performed before the process of filling the cavity with the fluid resin is initiated; and the process of making the surface of the cured resin communicate with the external space by retracting the pillar-shaped member in the communicating direction is performed after the process of molding the cured resin.

In one mode of the molded article production method according to the present invention, the previously described molded article production method is further characterized in that: the molded article production system has a plurality of molds; the first auxiliary connecting member is connected to the circumferential member of each of the plurality of molds; and the second auxiliary connecting member is connected to the bottom member of each of the plurality of molds.

In one mode of the molded article production method according to the present invention, the previously described molded article production method further includes the processes of: forming a closed space by shielding a space which minimally includes the cavity from ambient air; and depressurizing the closed space over a period of time which at least continues until the process of closing the mold is completed.

In one mode of the molded article production method according to the present invention, the previously described molded article production method further includes the processes of: preparing a material-receiving module for receiving a resin material which is a raw material for the fluid resin; and preparing at least one molding module having at least the mold and the mold-driving mechanism, wherein the molding module is attachable to and detachable from the material-receiving module, and the molding module is attachable to and detachable from another molding module.

### ADVANTAGEOUS EFFECTS OF THE INVENTION

According to the present invention, the cavity provided in the lower mold is formed by the circumferential member and the bottom member. The circumferential member and the bottom member are individually driven by separate driving mechanisms. This configuration allows the circumferential member and the bottom member to move independently. Therefore, firstly, it is possible to detach the outer circumferential surface of the cured resin from the inner circumferential surface of the circumferential member by lowering the circumferential member while the top surface of the cured resin is held by the inner bottom surface of the bottom member. Secondly, it is possible to detach the top surface of the cured resin from the inner bottom surface of the bottom member by lowering the bottom member while the outer circumferential surface of the cured resin is held by the inner circumferential surface of the circumferential member. By these operations, the molded article can be released from the mold surface of the mold without causing a significant amount of force to act on the molded article.

### BRIEF DESCRIPTION OF DRAWINGS

Figs. 1A and 1B are schematic front views showing two consecutive states of a molding module included in the molded article production system according to the first embodiment, where Fig. 1A is the state immediately after the beginning of the elevation of the lower mold, and Fig. 1B is the state immediately after the beginning of the elevation of the bottom member after a seal member has begun to be deformed.

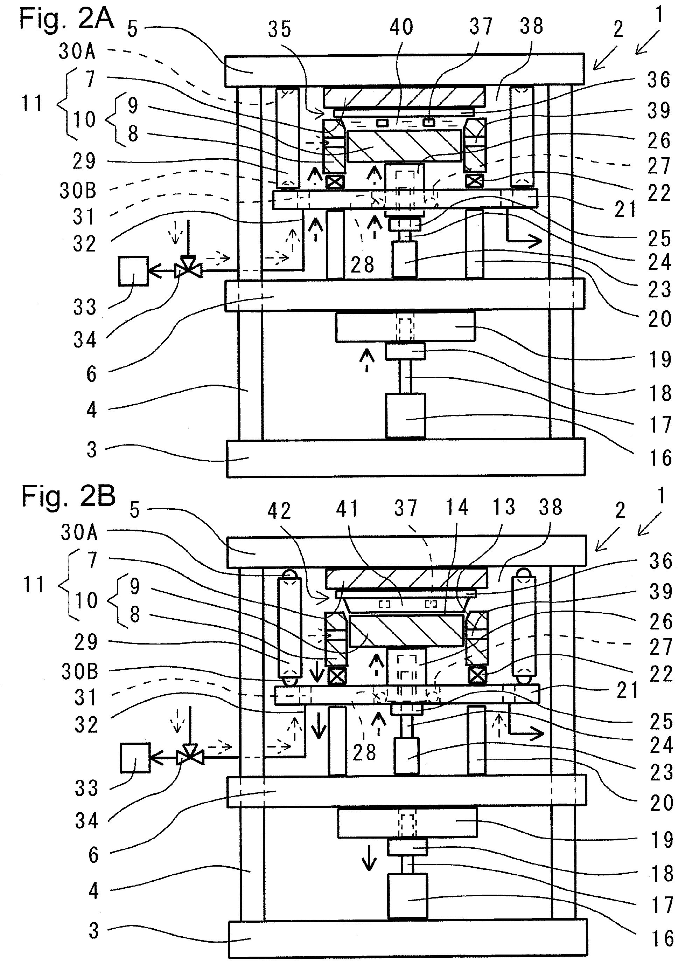

Figs. 2A and 2B are schematic front views showing two consecutive states of the molding module shown in Figs. 1A and 1B, where Fig. 2A is the state where the bottom member is elevated to and maintained at a predetermined vertical position after the substrate is clamped by the circumferential member, and Fig. 2B is the state where the circumferential member is lowered while the vertical position of the bottom member is maintained after the cured resin is formed in the cavity.

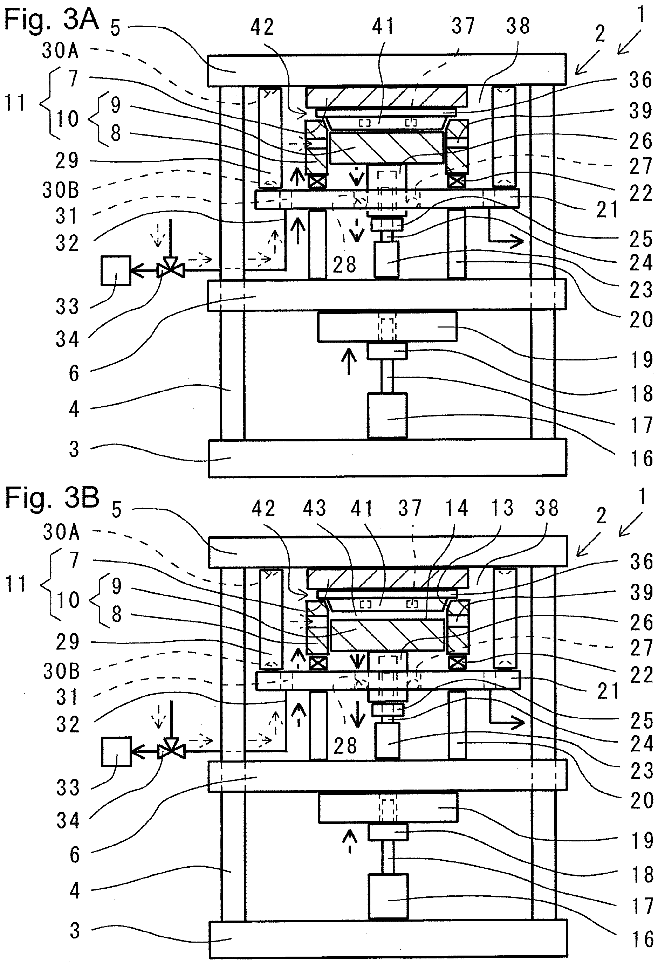

Figs. 3A and 3B are schematic front views showing two consecutive states of the molding module shown in Figs. 1A and 1B, where Fig. 3A is the state immediately before the substrate is once more clamped by the circumferential member which is being elevated while the vertical position of the bottom member is maintained, and Fig. 3B is the state where the bottom member is lowered while the vertical position of the circumferential member is maintained.

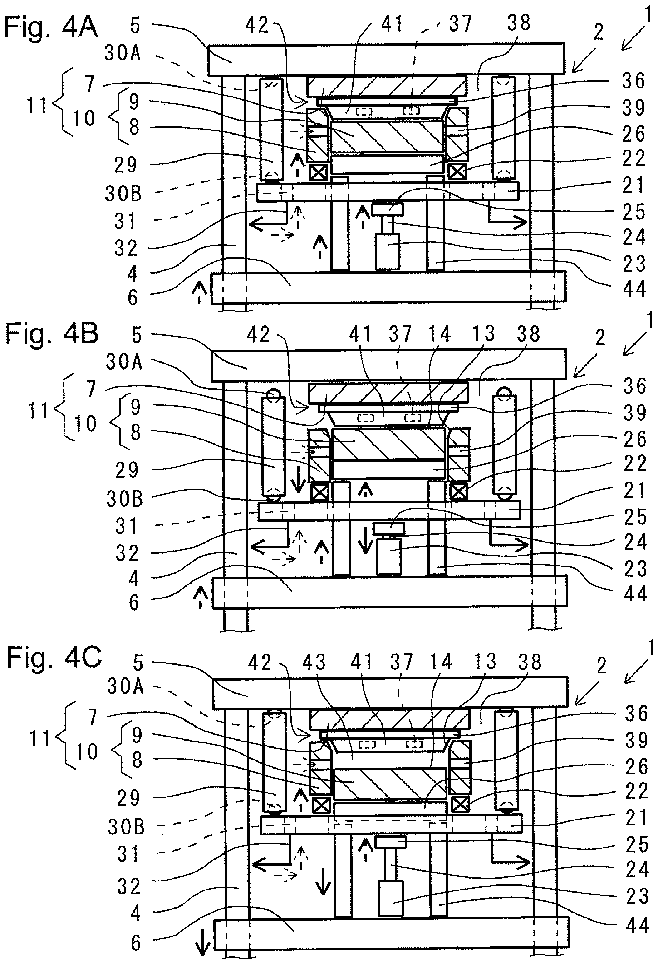

Figs. 4A-4C are schematic front views showing three consecutive states of a molding module included in the molded article production system according to the second embodiment, where Fig. 4A is the state immediately after the cured resin is formed in the cavity, Fig. 4B is the state where the circumferential member is lowered while the vertical position of the bottom member is maintained, and Fig. 4C is the state where the bottom member is lowered while the vertical position of the circumferential member is maintained after the circumferential member is elevated to once more clamp the substrate.

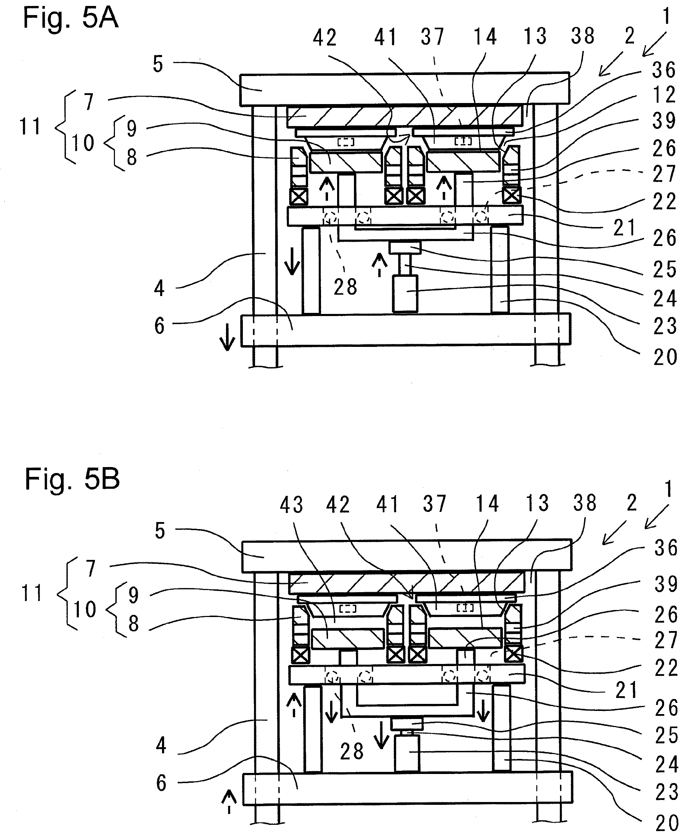

Figs. 5A and 5B are schematic front views showing two consecutive states for two sets of molds in a molding module included in the molded article production system according to the third embodiment, where Fig. 5A is the state where the circumferential member is lowered while the vertical position of the bottom member is maintained after the cured resin is formed in the cavity, and Fig. 5B is the state where the bottom member is lowered while the vertical position of the circumferential member is maintained after the circumferential member is elevated to once more clamp the substrate.

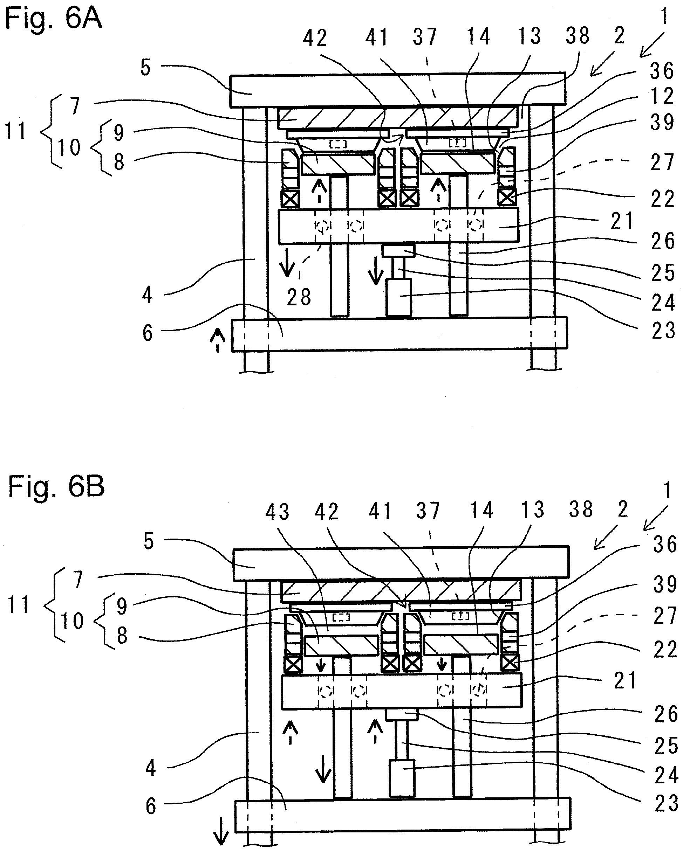

Figs. 6A and 6B are schematic front views showing two consecutive states for two sets of molds in a molding module included in the molded article production system according to the fourth embodiment, where Fig. 6A is the state where the circumferential member is lowered while the vertical position of the bottom member is maintained after the cured resin is formed in the cavity, and Fig. 6B is the state where the bottom member is lowered while the vertical position of the circumferential member is maintained after the circumferential member is elevated to once more clamp the substrate.

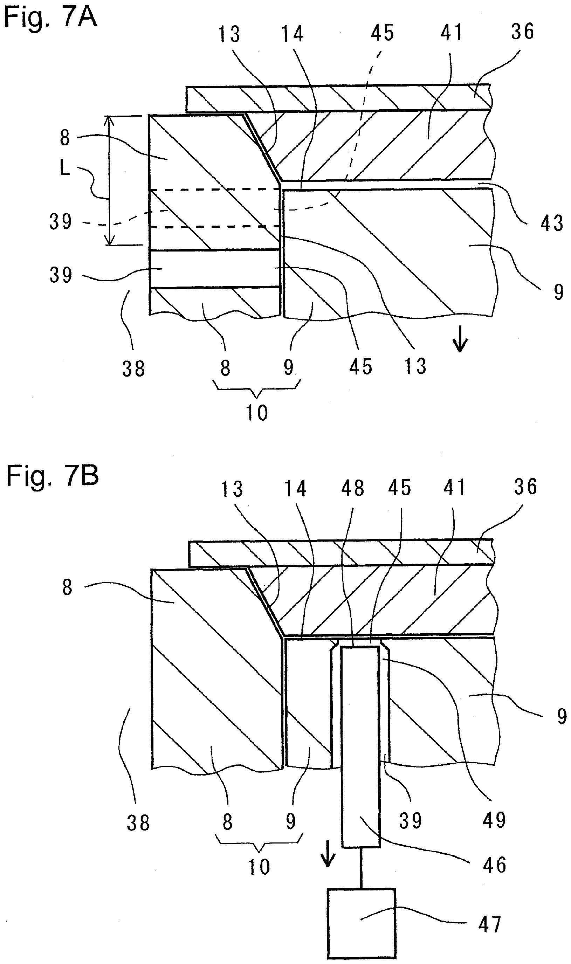

Figs. 7A and 7B are partial sectional views illustrating the communicating hole and the related structures, with the upper mold omitted, in a molded article production system according to the present invention.

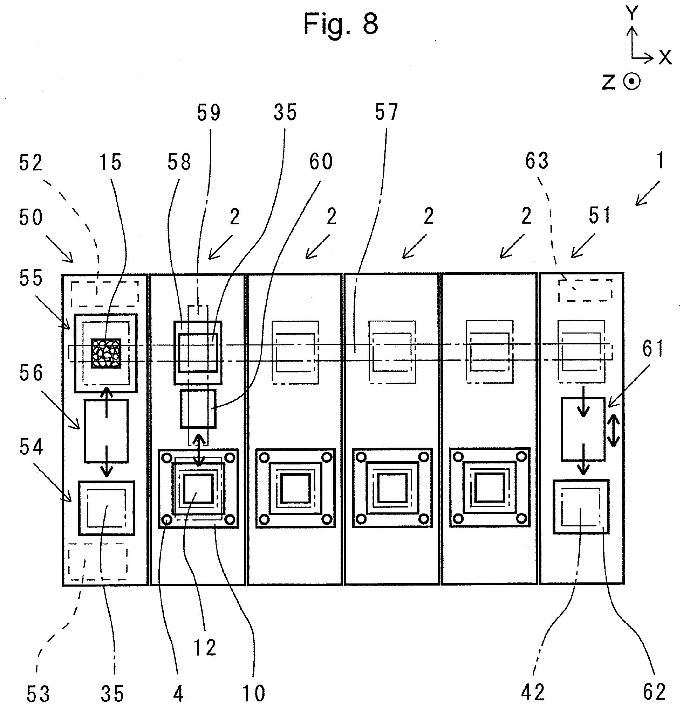

Fig. 8 is a schematic plan view showing a molded article production system according to the present invention, on the assumption that the members constituting the upper mold have been removed.

### DESCRIPTION OF EMBODIMENTS

In a molding module included in a resin-sealing system (which is one type of the molded article production system), the following components are provided: a mold having a lower mold and an upper mold facing the lower mold; a cavity provided in the lower mold; a bottom member forming the inner bottom surface of the cavity; a circumferential member forming the inner circumferential surface of the cavity; and a mold-driving mechanism provided for opening and closing the mold. The molding module is also provided with: a lower base; a support member vertically provided on the lower base; an upper base provided in the upper portion of the support member and facing the lower base; and an elevating platen mounted on the middle of the support member in a vertically moveable manner. Additionally, the molding module further includes: a first driving mechanism included in the mold-driving mechanism and attached to the lower base; a second driving mechanism included in the mold-driving mechanism and attached to the elevating platen; a main connecting member connecting the first driving mechanism and the elevating platen; a first auxiliary connecting member connected to the circumferential member; and a second auxiliary connecting member connected to the bottom member. The upper mold is attached to the upper base.

In the first and third embodiments (which will be described later), the first auxiliary connecting member is connected to the elevating platen, while the second auxiliary connecting member is connected to the second driving mechanism. The circumferential member is vertically driven by the elevating platen which is vertically driven by the first driving mechanism. The bottom member is vertically driven by the second driving mechanism.

In the second and fourth embodiments (which will be described later), the first auxiliary connecting member is connected to the second driving mechanism, while the second auxiliary connecting member is connected to the elevating platen. The bottom member is vertically driven by the elevating platen which is vertically driven by the first driving mechanism. The circumferential member is vertically driven by the second driving mechanism.

### FIRST EMBODIMENT

The first embodiment of the molded article production system according to the present invention is described with reference to Figs. 1A-3B. As one example of the molded article production system, a resin-sealing system is described. The resin-sealing system is used in the process of producing a sealed substrate (which is the molded article) by molding a sealing resin covering a semiconductor chip and other elements (which are hereinafter called "chip") mounted on a circuit board, such as a printed circuit board, using a mold. The sealed substrate is an intermediate product used for manufacturing one or more electronic parts, such as semiconductor products or circuit modules. In the present resin-sealing system, compression molding is adopted as the technique for the resin molding.

The molding module 2 provided in the resin-sealing system 1 is described with reference to Figs. 1A and 1B (as well as Figs. 7A and 7B). The molding module 2 shown in Fig. 1A has a lower base 3. At the four corners of the lower base 3, four tie bars 4 serving as the support members are fixed. An upper base 5 facing the lower base 3 is fixed to the upper portion of the four vertically extending tie bars 4. Between the upper base 3 and the lower base 5, an elevating platen 6 facing each of the upper and lower bases 3 and 5 is engaged with the four tie bars 4. The elevating platen 6 moves upward or downward by being driven by a driving mechanism (which will be described later). It should be noted that the phrase "A is fixed to B" includes the case where "an additional member (which may be an elastic body) is fixed to B, and A is fixed to this additional member."

An upper mold 7 is fixed to the lower face of the upper base 5. Directly below the upper mold 7, a frame-shaped circumferential member 8 is provided opposite to the upper mold 7. The upper surface of the circumferential member 8 faces the lower surface of the upper mold 7. A through-hole having a rectangular shape on the planer view is provided at the center of the circumferential member 8. Fitted in this through-hole of the circumferential member 8 is a bottom member 9 having a rectangular planer shape. The circumferential member 8 and the bottom member 9 are vertically driven by two driving mechanism, which will be described later. With such a configuration, the circumferential member 8 and the bottom member 9 can be elevated or lowered independently of each other.

The circumferential member 8 and the bottom member 9 combined together constitute the lower mold 10. The upper mold 7 and the lower mold 10 combined together constitute one set of mold 11 (which is hereinafter simply called the "mold 11"). Each of the upper and lower molds 7 and 10 is provided with a heater (not shown).

On the upper side of the lower mold 10, a cavity 12 is formed, which is a space to be filled with a fluid resin. The portion surrounding this cavity 12 is hereinafter called the "side surface of the cavity," while the portion forming the bottom of the cavity 12 is called the "bottom surface of the cavity." The side surface of the cavity is formed by the inner circumferential surface 13 of the circumferential member 8. The bottom surface of the cavity 12 is formed by the top surface of the bottom member 9. For convenience, the top surface of the bottom member 9 is hereinafter called the "inner bottom surface 14 of the bottom member 9." The cavity 12 is the space surrounded by the inner circumferential surface 13 of the circumferential member 8 and the inner bottom surface 14 of the bottom member 9.

For example, the cavity 12 is supplied with a resin material 15 made of a thermosetting resin, such as an epoxy resin or silicone resin. In Fig. 1A, a resin material which is in the form of a solid (e.g. powder, grains, lumps, sheet or thin pieces) at room temperature is shown as the resin material 15. The resin material 15 is heated with heaters (not shown) and melts. Thus, a fluid resin made of the molten resin is formed, and the cavity 12 is filled with this fluid resin (not shown).

On the lower base 3, a motor 16 is fixed as the first driving mechanism. The motor 16 has a ball screw 17, and a ball nut 18 is engaged with this ball screw 17. An elevating platen attachment plate 19 is fixed to the lower face of the elevating platen 6, and the ball nut 18 is fixed to this elevating platen attachment plate 19.

On the upper surface of the elevating platen 6, a frame member 20 is fixed, and a circumferential member attachment plate 21 is fixed to the upper surface of the frame member 20. In place of the frame member 20, a plurality of plate-shaped, pillar-shaped or similar members may be used. On the upper surface of the circumferential member attachment plate 21, a plurality of elastic bodies (e.g. coil springs or disc springs) 22 are disposed, and the circumferential member 8 is placed on these elastic bodies 22. By such a mechanism, the rotation of the motor 16 is sequentially transmitted via the ball nut 18, elevating platen attachment plate 19, elevating platen 6, frame member 20, circumferential member attachment plate 21 and elastic bodies 22, to eventually make the circumferential member 8 move upward or downward.

Another motor 23, which acts as the second driving mechanism, is fixed to the upper surface the elevating platen 6 at the position of corresponding to the center of the bottom member 9 as observed on the planer view. The motor 23 has a ball screw 24, and a ball nut 25 is engaged with this ball screw 24. The ball nut 25 is fixed to a bottom member attachment member 26, which is fixed to the lower portion of the bottom member 9. An elastic body (not shown) may additionally be provided between the bottom member 9 and the bottom member attachment member 26.

The bottom surface attachment member 26 can be moved upward or downward in the through-hole 27 provided in the central portion of the circumferential member attachment plate 21. Between the inner circumferential surface of the circumferential member attachment plate 21 in the through-hole 27 and the outer circumferential surface of the bottom member attachment member 26, a seal member 28 made of a fluorine rubber or similar material is provided along the entire circumference of the through-hole 27. Thus, the space between the bottom member 9 and the circumferential member attachment plate 21 is separated from the space located under the circumferential member attachment plate 21 and within the frame member 20.

On the upper surface of the circumferential member attachment plate 21, a frame-shaped ambient-air shield member 29 is fixed. Between the components located between the upper base 5 and the circumferential member attachment plate 21 (inclusive of the upper base 5 and the circumferential member attachment plate 21 themselves), seal members 30A and 30B made of a fluorine rubber or similar material are provided. For example, between the upper surface of the ambient-air shield member 29 and the lower surface of the upper base 5, a seal member 30A is provided on the upper surface of the ambient-air shield member 29 or the lower surface of the upper base 5, or on both of them. Similarly, a seal member 30B is provided between the lower surface of the ambient-air shield member 29 and the upper surface of the circumferential member attachment plate 21. Providing only one of the seal members 30A and 30B is also possible. It is additionally possible to attach one frame-shaped ambient-air shield member to the upper surface of the circumferential member attachment plate 21 and another frame-shaped ambient-air shield member to the lower surface of the upper base 5 so that these two members face each other. In this case, a seal member is provided on at least one of the mutually facing surfaces of the two frame-shaped ambient-air shield members.

In the circumferential member attachment plate 21, a suction hole 31 is provided outside the circumferential member 8 as observed on the planer view. The suction hole 31 is connected to a depressurizing means 33 via a suction tube 32, such as a vacuum pump or depressurization tank. The suction tube 32 is provided with a switching valve 34 for connecting the suction hole 31 to either the depressurizing means 33 or atmosphere.

On the lower surface of the upper mold 7, a substrate 35 to be sealed (which is hereinafter called the "bare substrate") is temporarily fixed by suction, clamping or other commonly known methods. The bare substrate 35 has a circuit board 36 as well as a chip 37 consisting of a semiconductor chip and other elements mounted on it. The connection terminal of the bare substrate 35 and that of the chip 37 are electrically connected by wires, bumps or other electrically conductive materials (not shown). A predetermined area on the surface (the lower surface in the figures) of the bare substrate 35, and the chip 37 are to be sealed with a sealing resin formed by curing the fluid resin in the cavity 12. The circumference member 8 has one or more communicating holes 39 for allowing the cavity 12 to communicate with the external space 38, which is the space inside the ambient-air shield member 29 and outside the mold 11. The communicating hole 39 is provided at a position slightly below the level corresponding to the thickness of the sealing resin to be formed (see Fig. 2A).

In the resin-sealing system 1, firstly, the rotation or stop of the motor 16 (first driving mechanism) is sequentially transmitted via the ball nut 18, elevating platen attachment plate 19, elevating platen 6, frame member 20, circumferential member attachment plate 21 and elastic bodies 22, to eventually drive the circumferential member 8 in the vertical direction or suspend its movement. Thus, the motor 16 makes the circumferential member 8 move upward or downward.

Secondly, the rotation of the motor 23 (second driving mechanism) is transmitted via the ball nut 25 and the bottom member attachment member 26, to eventually drive the bottom member 9 in the vertical direction. Thus, the motor 23 makes the bottom member 9 move upward or downward.

Thirdly, the rotation or stop of the motor 16 causes the motor 23 fixed on the elevating platen 6 to move vertically or suspend its movement. Such a vertical motion of the motor 23 causes a corresponding vertical motion of the bottom member 9 which is mechanically connected to the motor 23 via the ball nut 25 and the bottom member attachment member 26. Thus, the rotation of the motor 16 causes both the circumferential member 8 and the bottom member 9 to move upward or downward.

Additionally, by controlling the motors 16 and 23 in one of the following three modes, it is possible to vertically drive either the circumferential member 8 or the bottom member 9 while maintaining the other member at the same height. In the first mode, the motor 16 is rotated in one (forward) direction to make both the circumferential member 8 and the bottom member 9 move upward at speed V, while the motor 23 is rotated in the other (reverse) direction to make the bottom member 9 move downward at speed V. In this case, when viewed from the outside of the resin-sealing system 1, the circumferential member 8 moves upward at speed V while the movement of the bottom member 9 is suspended.

In the second mode, the motor 16 is rotated in the reverse direction to make both the circumferential member 8 and the bottom member 9 move downward at speed V, while the motor 23 is rotated in the forward direction to make the bottom member 9 move upward at speed V. In this case, when viewed from the outside of the resin-sealing system 1, the circumferential member 8 moves downward at speed V while the movement of the bottom member 9 is suspended.

In the third mode, while the motor 16 is stopped, the motor 23 is rotated to make the bottom member 9 move upward or downward at speed V. In this case, when viewed from the outside of the resin-sealing system 1, the bottom member 9 moves upward or downward at speed V while the movement of the circumferential member 8 is suspended. In summary, those three modes demonstrate that the circumferential member 8 and the bottom member 9 can be independently driven in the vertical direction by appropriately controlling the motors 16 and 23.

A molded article production method according to the present invention is hereinafter described with reference to Figs. 1A-3B. Initially, as shown in Fig. 1A, a bare substrate 35 is temporarily fixed to the lower surface of the upper mold 7 by a commonly known method. A resin material 15 in an appropriate form (e.g. granular) is supplied to the cavity 12. With the motor 23 stopped, the motor 16 is energized so as to rotate the motor 16 in the forward direction and thereby elevate the elevating platen 6. By this operation, the following two systems fixed to the elevating platen 6 are elevated at the same speed: The first system includes the frame member 20, circumferential member attachment plate 21, elastic bodies 22, circumferential member 8 and ambient-air shield member 29. The second system includes the motor 23, ball screw 24, ball nut 25, bottom member attachment member 26 and bottom member 9. Accordingly, by rotating the motor 16 in the forward direction, the circumferential member 8, bottom member 9 and ambient-air shield member 29 can be elevated at the same speed.

Next, as shown in Fig. 1B, the circumferential member 8, bottom member 9 and ambient-air shield member 29 are further elevated at the same speed. The seal member 30A provided on the upper surface of the ambient-air shield member 29 is made to come in contact with the lower surface of the upper base 5. Then, the seal member 30A begins to be deformed. The state in which the seal member 30A or 30B has begun to be deformed but is not completely compressed is hereinafter called the "incompletely closed state."

Subsequently, as shown in Fig. 1B, after the incompletely closed state is reached, the switching valve 34 is operated to make the space inside the ambient-air shield member 29 communicate with the depressurizing means 33. The space inside the ambient-air shield member 29 is thereby depressurized. In this process, the gas contained in the fluid resin 40 is discharged to the outside of the mold 11.

Then, the motor 16 is further rotated in the forward direction to completely compress the seal members 30A and 30B. The state in which the seal members 30A and 30B are completely compressed is hereinafter called the "completely closed state." By creating the completely closed state, the space inside the ambient-air shield member 29 is made to be a closed space which is shielded from the ambient air. Concurrently, the resin material 15 is melted by heat to produce a fluid resin 40 made of the molten resin. After the completely closed state is reached, the switching valve 34 is operated at an appropriate point in time to make the external space 38 communicate with the atmosphere (see Fig. 2A).

Next, as shown in Fig. 2A, the motor 16 is further rotated in the forward direction to further elevate the circumferential member 8. After the upper surface of the circumferential member 8 is pressed onto the circuit board 36 to clamp this board, the motor 16 is controlled so that the circumferential member 8 constantly applies a certain amount of pressure to the circuit board 36.

Next, as shown in Fig. 2A, the motor 23 is energized to make this motor 23 rotate in the forward direction and thereby elevate the bottom member 9. The bottom member 9 is elevated until the inner bottom surface 14 of the bottom member 9 reaches the position which is separated from the upper surface of the circumferential member 8 by a predetermined length (the "predetermined position"). Consequently, a cavity 12 having a predetermined depth equal to that length is formed. When it is determined that the bottom member 9 has reached the predetermined position, the motor 23 is controlled so that the bottom member 9 constantly applies a predetermined amount of pressure to the fluid resin 40 and maintains the predetermined position. In the figure, the thick dashed arrows mean that, when viewed from the outside of the resin-sealing system 1, the components indicated by those arrows are not moving although the drive sources (motors 16 and 23) for moving those components are operating.

By the processes described thus far, the completely closed state of the mold 11 is achieved. In this state, the distance between the upper surface of the circumferential member 8 and the inner bottom surface (top surface) 14 of the bottom member 9 corresponds to the thickness of the sealing resin 41 consisting of the cured resin (see Fig. 2B).

Subsequently, as shown in Fig. 2A, the fluid resin 40 is heated for a predetermined length of curing time. By this process, the fluid resin 40 is cured, whereby a sealing resin 41 consisting of the cured resin as shown in Fig. 2B is formed. By the processes described thus far, a sealed substrate 42 is completed. This sealed substrate 42 corresponds to the molded article including the cured resin (sealing resin 41) formed by curing the fluid resin 40.

Next, the state where the upper surface of the circumferential member 8 is pressed onto the circuit board 36 to clamp this board (see Fig. 2A) is maintained for a predetermined period of time. After that, the motors 16 and 23 are controlled as follows: The motor 23 is rotated in the forward direction to make the bottom member 9 move upward at speed V as viewed from the motor 23. Concurrently, the motor 16 is rotated in the reverse direction to make the elevating platen 6 move downward at speed V. When viewed from the outside of the resin-sealing system 1, the combination of these two motions makes the circumferential member 8 move downward at speed V while maintaining the bottom member 9 at a certain height. By this operation, the outer circumferential surface of the sealing resin 41 is separated from the inner circumferential surface of the circumferential member 8, while the top surface (the bottom face in the figure) of the sealing resin 41 is supported by the inner bottom surface 14 of the bottom member 9 which is maintained at the same height when viewed from the outside of the resin-sealing system 1.

Then, from the state shown in Fig. 2B, the motor 23 is rotated in the reverse direction to make the bottom member 9 move downward at speed V as viewed from the motor 23, as shown in Fig. 3A. Concurrently, the motor 16 is rotated in the forward direction to make the elevating platen 6 move upward at speed V. When viewed from the outside of the resin-sealing system 1, the combination of these two motion makes the circumferential member 8 move upward while maintaining the bottom member 9 at a certain height. Consequently, the circuit board 36 is once more clamped by the upper surface of the circumferential member 8. Fig. 3A shows the state immediately before the circuit board 36 is once more clamped. The motor 16 is controlled so that the circumferential member 8 constantly applies a certain amount of pressure to the circuit board 36.

Next, as shown in Fig. 3B, while the circumferential member 8 is constantly applying a certain amount of pressure to the circuit board 36, the motor 23 is further rotated in the reverse direction, whereby the bottom member 9 is lowered at speed V as viewed from the motor 23. By this operation, the top surface of the sealing resin 41 is separated from the inner bottom surface 14 of the bottom member 9, while the circuit board 36 is clamped by the upper surface of the circumferential member 8 maintained at the same height when viewed from the outside of the resin-sealing system 1, and while the outer circumferential surface of the cured resin 41 is supported by the inner circumferential surface of the circumferential member 8.

As shown in Fig. 3B, in this process, the gap 43 between the inner bottom surface 14 of the bottom member 9 and the top surface of the sealing resin 41 is made to communicate with the external space 38 which is at atmospheric pressure. This decreases the probability of breakage of the sealed substrate 42 which may occur due to the following two causes resulting from the operation of separating the top surface of the sealing resin 41 from the inner bottom surface 14 of the bottom member 9.

The first cause is the force of the inner bottom surface 14 of the bottom member 9 pulling the top surface of the sealed resin 41 downward. This force occurs when the inner bottom surface 14 of the bottom member 9 begins to be separated from the top surface of the sealed resin 41, since both surfaces have large areas. In the present embodiment, the gap 43 between the bottom member 9 and the sealing resin 41, which is formed at the outer edge of the top surface of the sealing resin 41 immediately after the inner bottom surface 14 of the bottom member 9 begins to be separated from the top surface of the sealing resin 41, becomes equal to the atmospheric pressure simultaneously with the formation of the gap. Therefore, the inner bottom surface 14 of the bottom member 9 can be easily separated from the top surface of the sealing resin 41, so that the breakage of the sealed substrate 42 does not easily occur.

The second cause is the downward force which acts on the sealed substrate (molded article) 42 due to the atmospheric pressure if a small gap is formed between the lower surface of the upper mold 7 and the nonsealed surface (the upper surface in the figures) including the outer edge of the circuit board 36 in the process of separating the top surface of the sealing resin 41 from the inner bottom surface 14 of the bottom member 9. In the present embodiment, such a downward force due to the atmospheric pressure does not act on the sealed substrate (molded article) 42, since the gap 43 is also at atmospheric pressure. Thus, breakage of the sealed substrate 42 is prevented.

According to the present embodiment, the circumferential member 8 and the bottom member 9 are individually driven by the separate driving mechanisms. Specifically, the circumferential member 8 is driven by the motor 16. The bottom member 9 is driven by the motor 16 and/or the motor 23. In other words, in one situation, the bottom member 9 is driven by only one of the motors 16 and 23. In another situation, the bottom member 9 is concurrently driven by both of the motors 16 and 23. By these driving modes, the circumferential member 8 and the bottom member 9 can be independently moved. Firstly, the circumferential member 8 is lowered while the top surface of the cured resin 41 is supported by the inner bottom surface 14 of the bottom member 9. By this operation, the outer circumferential surface of the cured resin 41 can be separated from the inner circumferential surface 13 of the circumferential member 8. Then secondly, the bottom member 9 is lowered while the outer circumferential surface of the cured resin 41 is supported by the inner circumferential surface 13 of the circumferential member 8. By this operation, the top surface of the cured resin 41 can be separated from the inner bottom surface 14 of the bottom member 9. By these operations, the sealed substrate (molded article) 42 can be released from the mold surface of the mold 11 without causing a significant amount of external force to act on the sealed substrate 42.

According to the present embodiment, the communicating hole 39 for allowing the mold surface forming the cavity 12 to communicate with the external space 38 outside the lower mold 10 is provided in the lower mold 10. In the process of separating the cured resin 41 from the mold surface forming the cavity 12, the surface of the cured resin 41 is made to communicate with the external space 38. Therefore, firstly, the breakage of the sealed substrate 42 due to the force of the inner bottom surface 14 of the bottom member 9 pulling the top surface of the sealed resin 41 downward does not easily occur. Then secondly, the sealed substrate (molded article) 42 is prevented from being pressed toward the gap 43 due to the atmospheric pressure, so that the breakage of the sealed substrate 42 due to such a pressure does not occur.

According to the present embodiment, when the sealed substrate (molded article) 42 is produced, the circumferential member 8 and the bottom member 9 are individually driven. Therefore, the circumferential member 8 and the bottom member 9 can be independently moved. This configuration allows the cavity 12 to be formed with various depths. Accordingly, a plurality of models of sealed substrates 42 having different thicknesses of the cured resin 41 can be easily produced with a single resin-sealing system 1. Accordingly, with the present embodiment, it is possible to easily produce various substrates ranging from a sealed substrate 42 which needs to have a small thickness, to a sealed substrate 42 which needs to have a large thickness. One example of the sealed substrate 42 which needs to have a small thickness is a substrate used for producing semiconductor devices for mobile phones. One example of the sealed substrate 42 which needs to have a large thickness is a substrate used for producing semiconductor devices for power control applications (e.g. circuit modules).

One semiconductor product may be produced from the sealed substrate 42. Additionally, a circuit board 36 having a plurality of areas divided by predetermined boundary lines, with one chip mounted on each area, may be sealed with resin. From this sealed substrate 42, a plurality of semiconductor products can be produced by singulating the sealed substrate 42 along the boundary lines after the resin sealing.

### SECOND EMBODIMENT

The second embodiment of the molded article production system according to the present invention is described with reference to Figs. 4A-4C. The components located below the elevating platen 6, as well as the depressurizing means 33 and the switching valve 34 shown in Figs. 1A-3B, are omitted from Figs. 4A-4C and subsequent figures. Identical components are denoted by the same numerals, and descriptions about such components are appropriately omitted.

The characteristic of the present embodiment, as compared to the molded article production system (resin-sealing system 1) shown in Figs. 1A-3B in the first embodiment, exists in that the relationship between the driving sources (the motors 16 and 23) and the driven components (the circumferential member 8 and the bottom member 9) is reversed. The elevating platen 6 is driven by the lower motor which is not shown (which corresponds to the motor 16 in Figs. 1A-3B). The motor 23 is fixed to the upper surface of the elevating platen 6. The circumferential member 8 is driven by this motor 23 via the circumferential member attachment plate 21 and the elastic bodies 22. The bottom member 9 is fixed to the upper surface of the elevating platen 6 via the bottom member attachment members 44 and 26 interposed therebetween. The circumferential member 8 and the bottom member 9 which are individually fixed to the elevating member 6 on the upper side of the elevating member 6 are simultaneously driven by the lower motor (not shown).

According to the present invention, the circumferential member 8 and the bottom member 9 are individually driven by the separate driving mechanisms. Specifically, the bottom member 9 is driven by the lower motor (not shown). The circumferential member 8 is driven by the motor 16 and/or the motor 23. In other words, in one situation, the circumferential member 8 is driven by either the lower motor 16 or the motor 23. In another situation, the circumferential member 8 is concurrently driven by both the lower motor 16 and the motor 23. By these driving modes, the circumferential member 8 and the bottom member 9 can be independently moved. Firstly, the circumferential member 8 is lowered while the top surface of the cured resin 41 is supported by the inner bottom surface 14 of the bottom member 9. By this operation, the outer circumferential surface of the cured resin 41 can be separated from the inner circumferential surface 13 of the circumferential member 8. Then secondly, the bottom member 9 is lowered while the outer circumferential surface of the cured resin 41 is supported by the inner circumferential surface 13 of the circumferential member 8. By this operation, the top surface of the cured resin 41 can be separated from the inner bottom surface 14 of the bottom member 9. By these operations, the sealed substrate (molded article) 42 can be released from the mold surface of the mold 11 without causing a significant amount of external force to act on the sealed substrate 42. Accordingly, in terms of the separation of the sealed substrate 42, the present embodiment produces the same effects as that of the first embodiment.

The resin-sealing system 1 shown in Figs. 4A-4C are provided with the communicating hole 39 as well as the depressurizing means 33 and the switching valve 34 shown in Fig. 1A-3B (although not shown in Figs. 4A-4C). Accordingly, in terms of the capability of preventing the sealed substrate 42 from breakage, the present embodiment produces the same effect as that of the first embodiment.

In the resin-sealing system 1 shown in Figs. 4A-4C, the circumferential member 8 and the bottom member 9 can be independently moved in a similar manner as the first embodiment. Accordingly, in terms of the capability of easily producing a variety of sealed substrates 42 with different thicknesses using a single resin-sealing system 1, the present embodiment produces the same effect as that of the first embodiment.

### THIRD EMBODIMENT

The third embodiment of the molded article production system according to the present invention is described with reference to Figs. 5A and 5B. The ambient-air shield member 29, seal members 30A and 30B, suction hole 31 and suction tube 32 are omitted from Figs. 5A and 5B as well as subsequent figures. The characteristic of the present embodiment, as compared to the molded article production system (resin-sealing system 1) shown in Figs. 1A-3B in the first embodiment, exists in that a plurality of molds 11 (in Figs. 5A and 5B, two molds) are provided. Therefore, according to the present embodiment, the production capacity of the single molding module 2 is doubled. Additionally, the present embodiment produces the same effects as those of the first embodiment.

In the present embodiment, it is preferable to provide an elastic body (not shown) between the bottom member 9 and the bottom member attachment member 26 in each mold. This is advantageous in that, even if the plurality of circuit boards 36 (in Figs. 5A and 5B, two circuit boards) have different thicknesses, the sealing resins 41 of the sealed substrates 42 will be prevented from significantly varying in thickness when the sealed substrates 42 are produced.

### FOURTH EMBODIMENT

The fourth embodiment of the molded article production system according to the present invention is described with reference to Figs. 6A and 6B. The characteristic of the present embodiment, as compared to the molded article production system (resin-sealing system 1) shown in Figs. 4A-4C in the second embodiment, exists in that a plurality of molds 11 (in Figs. 6A and 6B, two molds) are provided. Therefore, according to the present embodiment, the production capacity of the single molding module 2 is doubled. Additionally, the present embodiment produces the same effects as those of the first embodiment.

In the present embodiment, it is preferable to provide an elastic body (not shown) between the bottom member 9 and the bottom member attachment member 26 in each mold. This is advantageous in that, even if the plurality of circuit boards 36 (in Figs. 6A and 6B, two circuit boards) have different thicknesses, the sealing resins 41 of the sealed substrates 42 will be prevented from significantly varying in thickness when the sealed substrates 42 are produced.

### FIFTH EMBODIMENT

The fifth embodiment of the molded article production system according to the present invention is described with reference to Figs. 7A and 7B. This embodiment is concerned with how the gap 43 is made to communicate with the external space 38, i.e. the space outside the mold 11, through the communicating hole 39 shown in Figs. 1A-6B.

Figs. 7A and 7B illustrate the position of the communicating hole 39 shown in Figs. 1A-6B. As shown in Fig. 7A, in the circumferential member 8, the communicating hole 39 is provided at a level lower than the position which corresponds to the thickness of the sealing resin to be molded (see Fig. 2A) from the upper surface of the circumferential member 8. An opening 45 of the communicating hole 39 is formed on the inner circumferential surface 13 of the circumferential member 8 (specifically, on the surface extending downward from the inner circumferential surface 13 indicated by the thick diagonal lines in the figures). Therefore, the opening 45 communicate with the gap between the inner circumferential surface 13 of the circumferential member 8 and the outer circumferential surface of the bottom member 9. Immediately after the bottom member 9 begins to move downward from the sealing resin 41, the gap 43 between the inner bottom surface 14 of the bottom member 9 and the sealing resin 41 is made to communicate with the communicating hole 39 and the opening 45 through the gap between the inner circumferential surface 13 of the circumferential member 8 and the outer circumferential surface of the bottom member 9. Accordingly, it is possible to make the pressure within the gap 43 between the inner bottom surface 14 of the bottom member 9 and the sealing resin 41 shown in Fig. 3B equal to the atmospheric pressure by making the gap communicate with the external space 38.

There are two modes for the position at which the communicating hole 39 can be provided. According to the first mode, as shown by the solid line in Fig. 7A, the communicating hole 39 is provided at a position lower than the position corresponding to the thickness of the sealing resin by a certain length. In this case, the inner bottom surface 14 is initially brought to a position higher than the upper end of the communicating hole 39, and the resin material is supplied to the cavity 12 (see Fig. 1A). After that, the bottom member 9 is elevated or lowered to the position corresponding to the thickness of the sealing resin. By this operation, a sealing resin 41 having a thickness corresponding to the length which is equal to or smaller than a predetermined length L can be molded. This length L is equal to the distance between the upper surface of the circumferential member 8 and the upper end of the communicating hole 39, with the positioning error of the inner bottom surface 14 reduced. Therefore, by using the single lower mold 10, the sealing resin 41 can be molded up to the maximum thickness corresponding to length L.

According to the second mode, as shown by the broken line in Fig. 7A, the communicating hole 39 is provided at a position slightly lower than the position corresponding to the thickness of the sealing resin 41 to be molded. Therefore, immediately after the bottom member 9 begins to move downward from the sealing resin 41, the gap 43 between the bottom member 9 and the sealing resin 41 is made to be equal to the atmospheric pressure through the opening 45 and the communicating hole 39.

Fig. 7B shows the mode in which the communicating hole 39 is provided in the bottom member 9. This communicating hole 39 extends from the opening 45 downward in the figure. Inside the communicating hole 39, a pillar-shaped member 46 is provided in a longitudinally movable fashion. The pillar-shaped member 46 can be longitudinally moved in the communicating hole 39 by an actuator 47. When the pillar-shaped member 46 is made to stop at a predetermined position, the top surface 48 (the upper surface in the figure) of the pillar-shaped member 46 forms a portion of the inner bottom surface 14 of the bottom member 9. In other words, the top surface 48 of the pillar-shaped member 46 closes the opening 45 formed in the inner bottom surface 14 of the bottom member 9.

Inside the communicating hole 39, a widened portion 49 having a larger cross section than that of the communicating hole 39 is formed from a position slightly receded from the opening 45 along the extending direction of the communicating hole 39 (in the direction toward the outside of the bottom member 9, or the lower side in the figure). The cross section of the widened portion 49 is shaped so that it includes the cross-sectional shape of the pillar-shaped member 46 on the planer view and has a portion larger than the cross-sectional shape of the pillar-shaped member 46. For example, the opening 45 and the widened portion 49 may be concentrically formed, with the diameter of the widened portion 49 larger than that of the opening 45. After the sealing resin 41 is formed, the pillar-shaped member 46 is pulled downward before the bottom member 9 begins to move downward. By this operation, before the bottom member 9 begins to move downward, the surface of the sealing resin 41 at the opening 45 is made to communicate with the external space 38 through the communicating hole 39 having the opening 45 and the widened portion 49. In other words, at this point in time, the surface of the sealing resin 41 at the opening 45 is exposed to the atmospheric pressure. Therefore, immediately after the bottom member 9 begins to move downward from the sealing resin 41, the gap 43 between the bottom member 9 and the sealing resin 41 (see Fig. 3B) is made to be equal to the atmospheric pressure through the communicating hole 39 having the opening 45 and the widened portion 49.

The two configurations respectively shown in Figs. 7A and 7B may be combined. Specifically, the communicating hole 39 having the opening 45 and the widened portion 49 with the pillar-shaped member 46 inserted in the communicating hole 39 in a longitudinally movable fashion (see Fig. 7B) may be similarly formed in the circumference member 8 shown in Fig. 7A. In this case, the opening 45 should preferably be located at the position indicated by the broken line in Fig. 7A or at a position where the opening 45 overlaps the upper surface of the bottom member 9 when viewed from the side.

According to the present embodiment, the surface of the cured resin 41 is made to communicate with the external space 38 immediately after the bottom member 9 begins to move downward from the sealing resin 41, or before the bottom member 9 begins this downward movement. Therefore, immediately after the bottom member 9 begins to move downward from the sealing resin 41, or simultaneously with the beginning of this downward movement, the gap 43 between the bottom member 9 and the sealing resin 41 is made to be equal to the atmospheric pressure through the opening 45 and the communicating hole 39. Accordingly, breakage of the sealed substrate 42 can be more effectively prevented.

### SIXTH EMBODIMENT

The sixth embodiment of the molded article production system (resin-sealing system 1) according to the present invention is described with reference to Fig. 8. The resin-sealing system 1 has one material-receiving module 50, four molding modules 2, and one dispensing module 51. Additionally, the resin-sealing system 1 has a power source 52 for supplying electric power to the entire resin-sealing system 1 and a controller 53 for controlling each component in the system.

The material-receiving module 50 and the leftmost molding module 2 in Fig. 8 can be attached to and detached from each other. The mutually neighboring molding modules 2 can also be attached to and detached from each other. Additionally, the rightmost molding module 2 in Fig. 8 and the dispensing module 51 can be attached to and detached from each other. When these components are attached to each other, their mutual position is determined by commonly known means, such as the positioning holes and the positioning pins. The attachment of those components is achieved by commonly known means, such as thread fastening using bolts and nuts.

The material-receiving module 50 has a substrate material receiver 54, a resin material receiver 55 and a material transfer mechanism 56. The substrate material receiver 54 receives a bare substrate from the outside of the resin-sealing system 1. The resin material receiver 55 receives a resin material 15 made of a solid resin from the outside of the resin-sealing system 1. In Fig. 8, a granular resin is shown as the resin material 15.

The resin-sealing system 1 is provided with an X-directional guide rail 57 extending along the X direction from the material-receiving module 50 through the four molding modules 2 to the dispensing module 51. On the X-directional guide rail 57, a main carrier mechanism 58 is mounted in such a manner that it can move in the X direction. The main carrier mechanism 58 is provided with a Y-directional guide rail 59 extending along the Y direction. On the Y-directional guide rail 59, an auxiliary carrier mechanism 60 (which is a part of the main carrier mechanism 58) is mounted in such a manner that it can move along the Y direction. The auxiliary carrier mechanism 60, with the bare substrate 35 held in the upper portion and the resin material 15 held in the lower portion, moves bidirectionally between a position above the X-directional guide rail 57 and a position above the cavity 12 of the lower mold 10 in one molding module 2. The auxiliary carrier mechanism 60 supplies the bare substrate 35 to the lower surface of the upper mold (not shown) and the resin material 15 to the cavity 12 of the lower mold 10.

The resin-sealing system 1 has a controller 53. A control driver included in this controller 53 produces signals, whereby the direction, number of revolutions and torque of the motors 16 and 23 (see Figs. 1A and 1B) are controlled. Additionally, the controller 53 is responsible for controlling the operation of the main carrier mechanism 58 and the auxiliary carrier mechanism 60.

In the present embodiment, the carrier mechanism consisting of the main carrier mechanism 58 and the auxiliary carrier mechanism 60 carries both the bare substrate 35 and the sealed substrate 42 which is the molded article obtained by resin-sealing the chip 37 (see Figs. 1A and 1B) mounted on the bare substrate 35. This configuration simplifies the structure of the resin-sealing system 1, since the carrier mechanism consisting of the main carrier mechanism 58 and the auxiliary carrier mechanism 60 doubles as the carry-in mechanism and the carry-out mechanism.

The dispensing module 51 has a molded article transfer mechanism 61 for carrying the sealed substrate 42 and a magazine 62 for containing a number of sealed substrates 42. The dispensing module 51 also has a vacuum pump 63. The vacuum pump 63 is a depressurizing source for generating a suction force for holding the bare substrate 35, sealed substrate 42 and other objects within the entire resin-sealing system 1. The vacuum pump 63 may be provided in the material-receiving module 50.

The vacuum pump 63 is also used as the depressurizing source for evacuating the "ambient-air shield space," which is the space between the upper mold (not shown) and the lower mold 10, inclusive of the cavity 12. The ambient-air shield space is formed within the space between the upper mold and the lower mold 10 inclusive of the cavity 12 during the period of time from the point when the resin material 15 is supplied to the cavity 12, to the point when the mold 11 is completely closed. Specifically, the space between the upper mold and the lower mold 10 inclusive of the cavity 12 is separated from the ambient air by means of seal members (see the seal members 30A and 30B in Figs. 1A-4C). Evacuating this ambient-air shield space suppresses the generation of bubbles (voids) in the cured resin 41 shown in Figs. 2A-6B. Alternatively, a high-capacity depressurization tank evacuated with the vacuum pump 63 may be used as the depressurizing source.

According to the present embodiment, the molding modules 2 neighboring each other among the four molding modules 2 can be attached to and detached from each other. Therefore, the number of molding modules 2 can be increased or decreased to meet an increase or decrease in the demand. For example, if the demand for a specific product has increased in a region where Factory "A" is located, the molding modules 2 used for the production of that specific product are detached from the molded article production system (resin-sealing system 1) owned by Factory "B" located in a region where that product is not in high demand. The detached molding modules 2 are transported to Factory "A", and those transported molding modules 2 are attached to the molded article production system owned by Factory "A." In other words, the molding modules 2 are added to the molded article production system. In this manner, the increased demand within the region where Factory "A" is located can be met. Thus, according to the present embodiment, a molded article production system which is flexible to adjust to an increase or decrease in the demand can be realized.

The previously described molded article production system (resin-sealing system 1) can be subjected to the following variations: In the first variation, the material-receiving module 50 and the dispensing module 51 are integrated with each other into a single receiving-and-dispensing module 51, and this module is disposed at one end of the resin-sealing system 1 (at the left or right end in Fig. 8). In this variation, since one or more molding modules 2 are exposed at the other end (the right or left end in Fig. 8) of the resin-sealing system 1, it is easy to attach or detach one or more molding modules 2.

In the second variation, the material-receiving module 50 and one molding module 2 are integrated with each other into a single receiving-and-molding module 2, and this module is disposed at one end (at the left or right end in Fig. 8) of the molded article production system (the resin-sealing system 1). In this variation, another molding module 2 is attached to the receiving-and-molding module 2, or a plurality of molding modules 2 are sequentially attached to it. The dispensing module 51 is attached to the molding module 2 located at the other end (the right or left end in Fig. 8) of the resin-sealing system 1 to complete the molded article production system.

In the third variation, the main carrier mechanism 58 and the auxiliary carrier mechanism 60 in the molded article production system (resin-sealing system 1) are only used as the carry-in mechanism, and a carry-out mechanism is provided separately from the carry-in mechanism. In this variation, the carry-in mechanism and the carry-out mechanism operate independently from each other. Therefore, the efficiency of the molding operation in the resin-sealing system 1 improves.

Variations are not limited to the previously described ones; the present embodiment merely requires that the neighboring modules 2 in the molded article production system (resin-sealing system 1) can be attached to and detached from each other. The present invention can be applied in a molded article production system having such a configuration.

The present invention is not limited to the compression molding but can also be applied in the transfer molding and the injection molding. The molded article production system according to the present invention may be any of the previously described molded article production systems in which injection molding, transfer molding or compression molding is employed as the method for molding the molded article. Similarly, the molded article production method according to the present invention may be any of the previously described molded article production methods in which injection molding, transfer molding or compression molding is employed as the method for molding the molded article.

According to the foregoing descriptions, the operation which is initially performed after the completion of the resin sealing is to lower the circumferential member 8 while maintaining the bottom member 9 at a certain height as viewed from the outside of the resin-sealing system 1. It is also possible to initially lower the bottom member 9, while maintaining the circumferential member 8 at a certain height as viewed from the outside of the resin-sealing system 1, after the completion of the resin sealing.

After the sealing resin 41 is molded and the mold is opened, the circumferential member 8 and the bottom member 9 may be made to move upward or downward relative to each other. By this operation, the cured resin formed between the inner circumferential surface 13 of the circumferential member 8 (see Figs. 7A and 7B) and the outer circumferential surface of the bottom member 9 can be scraped out onto one or both of the upper and lower sides of the lower mold. The cured resin which has been scraped out as the resin residue is removed by a vacuum cleaning system. It is also possible to scrape out the resin residue into a container placed below the lower mold and to dispose of the resin residue collected in the container. Such a cleaning process enables the molded article production system to continuously operate in a consistent manner.

In place of the configuration using the four tie bars, the so-called "hold frame" configuration, in which the upper base, lower base and two pillar-shaped members connecting the two bases are combined together as a single structure, may be adopted. In this case, each of the two pillar-shaped members corresponds to the support member. The upper base, lower base and two pillar-shaped members connecting the two bases may consist of a single frame-shaped member. Alternatively, it may be constructed by combining four separate members.

The position of the two driving mechanisms (motors 16 and 23) is not limited to the central portion of the lower base 3 and that of the elevating platen 6. The motor 16 may be placed near the circumferential edge of the lower base 3. Similarly, the motor 23 may be placed near the circumferential edge of the elevating platen 6. In these cases, for example, the rotation shaft of the motor 16 or 23 is mechanically connected with the central ball screw 17 or 24 via a pulley for the motor, a timing belt, and a pulley for the ball screw.

In place of the electrical mechanism consisting of the motor, a hydraulic mechanism or pneumatic mechanism may be used. A toggle mechanism may be combined with any of these mechanisms.

One example of the sealed substrate 42 (see Fig. 2B) as the molded article is an intermediate product used for producing a semiconductor product, such as an integrated circuit (IC) or light emitting diode (LED). The sealed substrate 42 itself may be a semiconductor product. The sealed substrate 42 may also be an intermediate product for producing a circuit module consisting of a semiconductor chip combined with passive components (e.g. resistors, capacitors, inductors, etc.) and/or electronic parts (e.g. sensors, filters, etc.). One example of the circuit module is a control circuit module used in transport machinery for controlling an internal combustion engine or electric motor, or for controlling the steering system or braking system. Additionally, the circuit module may be a so-called "power control circuit module" used for controlling the generation, transmission and distribution of electric power.

The circuit substrate 36 is not limited to a circuit board, such as the printed circuit board. For example, the circuit substrate 36 may be a semiconductor wafer (e.g. silicon wafer), ceramic substrate or metallic lead frame.

The molded article to be produced is not limited to the sealed substrate 42 (see Fig. 2B); it may be any generally known kind of molded article other than electronic parts and semiconductor-related products. For example, the present invention can be applied in the production of a lens, optical module, light guide plate or other optical parts by resin molding, or in the production of any generally known kind of resin-molded article. In other words, the contents of the foregoing descriptions concerning the resin-sealing system 1 also hold true for any type of commonly used molded article production system.

The descriptions thus far have been concerned with the case where the bottom member 9 has a rectangular planer shape. The shape of the bottom member 9 is not limited to that shape; for example, it may have a circular planer shape or an irregular shape (e.g. a circular shape with projections and/or recesses, or a rectangular shape with projections and/or recesses). In these cases, the through-hole formed in the central portion of the circumferential member 8 should have a planer shape corresponding to that of the bottom member 9 (i.e. a circular shape, a circular shape with projections and/or recesses, or a rectangular shape with projections and/or recesses).

As the resin material 15 to be supplied to the cavity 12, a resin which is in a jelly-like form at room temperature ("jelly-like resin") may be used, or a resin material which is in a liquid form at room temperature ("liquid resin") may also be used. In the latter case, the liquid resin supplied to the cavity 12 directly serves as the fluid resin 40. In place of the thermosetting resin, a thermoplastic resin may be used.

The present invention is not limited to any of the previously described embodiments but allows for an arbitrary and appropriate combination, modification or selection according to necessity within the scope of the appended claims.

### REFERENCE SIGNS LIST

1... Resin-Sealing System (Molded Article Production System)
2... Molding Module
3... Lower Base
4... Tie Bar
5... Upper Base
6... Elevating Platen
7... Upper Mold
8... Circumferential Member
9... Bottom Member
10... Lower Mold
11... Mold
12... Cavity
13... Inner Circumferential Surface
14... Inner Bottom Surface
15... Resin Material
16... Motor (First Driving Mechanism)
17... Ball Screw (Main Connecting Member)
18... Ball Nut (Main Connecting Member)
19... Elevating Platen Attachment Plate (Main Connecting Member)
20... Frame Member (First Auxiliary Connecting Member)
21... Circumferential Member Attachment Plate (First Auxiliary Connecting Member)
22... Elastic Body (First Auxiliary Connecting Member)
23... Motor (Second Driving Mechanism)
24... Ball Screw (Second Auxiliary Connecting Member)
25... Ball Nut (Second Auxiliary Connecting Member)
26... Bottom Member Attachment Member (Second Auxiliary Connecting Member)
27... Through Hole
28... Seal Member
29... Ambient-Air Shield Member
30A, 30B... Seal Member
31... Suction Hole
32... Suction Tube
33... Depressurizing Means
34... Switching Valve
35... Substrate to Be Sealed (Bare Substrate)
36... Circuit Board
37... Chip
38... External Space
39... Communicating Hole
40... Fluid Resin
41... Sealing Resin
42... Sealed Substrate (Molded Article)
43... Gap
44... Bottom Member Attachment Member
45... Opening
46... Pillar-Shaped Member
47... Actuator
48... Top Surface
49... Widened Portion
50... Material-Receiving Module
51... Dispensing Module
52... Power Source
53... Controller
54... Substrate Material Receiver
55... Resin Material Receiver
56... Material Transfer Mechanism
57... X-Directional Guide Rail
58... Main Carrier Mechanism
59... Y-Directional Guide Rail
60... Auxiliary Carrier Mechanism
61... Molded Article Transfer Mechanism
62... Magazine
63... Vacuum Pump

## Claims

1. A molded article production system including: a mold (11) having at least a lower mold (10) and an upper mold (7) facing the lower mold (10); a cavity (12) provided in the lower mold (10); a bottom member (9) having an inner bottom surface (14) forming a bottom surface (14) of the cavity (12); a circumferential member (8) having an inner circumferential surface (13) forming a side surface of the cavity (12); and a mold-driving mechanism provided for opening and closing the mold (11), the system configured to produce a molded article including a cured resin (41) formed by curing a fluid resin (40) filling the cavity (12) while holding the mold (10) in a closed state, and the system comprising:
a lower base (3);
a support member (4) vertically provided on the lower base (3);
an upper base (5) provided in an upper portion of the support member (4) and facing the lower base (3);
an elevating platen (6) mounted on a middle portion of the support member (4) in a vertically moveable manner;
a first driving mechanism (16) included in the mold-driving mechanism and attached to the lower base (3);
a second driving mechanism (23) included in the mold-driving mechanism and attached to the elevating platen (6);
a main connecting member (19) connecting the first driving mechanism (16) and the elevating platen (6);
a first auxiliary connecting member (20, 21, 22) connected to the circumferential member (8); and
a second auxiliary connecting member (24, 25, 26) connected to the bottom member (9),
wherein:
the upper mold (7) is attached to the upper base (5);
the first auxiliary connecting member (20, 21, 22) is connected to the elevating platen (6);
the second auxiliary connecting member (24, 25, 26) is connected to the second driving mechanism (23);
the circumferential member (8) is vertically driven by the elevating platen (6) which is vertically driven by the first driving mechanism (16); and
the bottom member (9) is vertically driven by the second driving mechanism (23) **characterized by**:
a communicating hole (39) provided in the lower mold (10), for allowing a mold surface forming the cavity (12) to communicate with an external space (38) outside the lower mold (10); and
an opening formed by the communicating hole (39) on the mold surface forming the cavity (12)
the communicating hole (39) is provided in a communicating member consisting of at least one of the circumferential member (8) and the bottom member (9);
the lower mold (10) is provided with a pillar-shaped member (46) inserted in the communicating hole (39) in a longitudinally movable fashion,
a top surface (48) formed on the pillar-shaped member (46) and configured to fit in the opening (45), and
a widened portion (49) formed in the communicating hole (39) and extending toward the external space from a position receded from the opening (45) along a communicating direction which is an extending direction of the communicating hole (39), the widened portion (49) including a cross-sectional shape of the pillar-shaped member (46) on a planer view and having a portion larger than that cross-sectional shape;
the top surface (48) closes the opening (45) when the pillar-shaped member (46) is advanced toward the cavity (12) until the top surface reaches the opening (45); and
the communicating hole (39) including the opening (45) and the widened portion (49) communicates with the external space when the pillar-shaped member (46) is retracted in the communicating direction.

2. A molded article production system including: a mold (11) having at least a lower mold (10) and an upper mold (7) facing the lower mold (10); a cavity (12) provided in the lower mold (10); a bottom member (9) having an inner bottom surface (14) forming a bottom surface of the cavity (12); a circumferential member (8) having an inner circumferential surface (13) forming a side surface of the cavity (12); and a mold-driving mechanism provided for opening and closing the mold (11), the system configured to produce a molded article including a cured resin (41) formed by curing a fluid resin (40) filling the cavity (12) while holding the mold (10) in a closed state, and the system comprising:
a lower base (3);
a support member (4) vertically provided on the lower base (3);
an upper base (5) provided in an upper portion of the support member (4) and facing the lower base (3);
an elevating platen (6) mounted on a middle portion of the support member (4) in a vertically moveable manner;
a first driving mechanism (16) included in the mold-driving mechanism and attached to the lower base (3);
a second driving mechanism (23) included in the mold-driving mechanism and attached to the elevating platen (6);
a main connecting member (19) connecting the first driving mechanism (16) and the elevating platen (6);
a first auxiliary connecting member (20, 21, 22) connected to the circumferential member (8); and
a second auxiliary connecting member (24, 25, 26) connected to the bottom member (9),
wherein:
the upper mold (7) is attached to the upper base (5);
the first auxiliary connecting member (20, 21, 22) is connected to the second driving mechanism (23) ;
the second auxiliary connecting member (24, 25, 26) is connected to the elevating platen (6);
the bottom member (9) is vertically driven by the elevating platen (6) which is vertically driven by the first driving mechanism (16); and
the circumferential member (8) is vertically driven by the second driving mechanism (23)
**characterized by**:
a communicating hole (39) provided in the lower mold (10), for allowing a mold surface forming the cavity (12) to communicate with an external space (38) outside the lower mold (10); and
an opening formed by the communicating hole (39) on the mold surface forming the cavity (12)
the communicating hole (39) is provided in a communicating member consisting of at least one of the circumferential member (8) and the bottom member (9);
the lower mold (10) is provided with a pillar-shaped member (46) inserted in the communicating hole (39) in a longitudinally movable fashion,
a top surface (48) formed on the pillar-shaped member (46) and configured to fit in the opening (45), and
a widened portion (49) formed in the communicating hole (39) and extending toward the external space from a position receded from the opening (45) along a communicating direction which is an extending direction of the communicating hole (39), the widened portion (49) including a cross-sectional shape of the pillar-shaped member (46) on a planer view and having a portion larger than that cross-sectional shape;
the top surface (48) closes the opening (45) when the pillar-shaped member (46) is advanced toward the cavity (12) until the top surface reaches the opening (45); and
the communicating hole (39) including the opening (45) and the widened portion (49) communicates with the external space when the pillar-shaped member (46) is retracted in the communicating direction.

3. The molded article production system according to claim 1 or 2, wherein:
the communicating hole is provided in the circumferential member; and
the communicating hole is provided at a position where, after a gap begins to be formed between the mold surface on the circumferential member and the cured resin, the communicating hole allows the gap to communicate with the external space.

4. The molded article production system according to one of claims 1-3, wherein:
a plurality of the molds is provided;
the first auxiliary connecting member is connected to the circumferential member of each of the plurality of the molds; and
the second auxiliary connecting member is connected to the bottom member of each of the plurality of the molds.

5. The molded article production system according to one of claims 1-4, further comprising:
an ambient-air shield member provided between the upper base and the first auxiliary connecting member so that a space which minimally includes the cavity becomes a closed space shielded from ambient air;
at least one seal member provided between the upper base and the first auxiliary connecting member; and
a depressurizing means connected to the closed space, for depressurizing the closed space.

6. The molded article production system according to one of claims 1-5, further comprising:
a material-receiving module for receiving a resin material which is a raw material for a fluid resin; and
at least one molding module having at least the mold and the mold-driving mechanism,
wherein the molding module is attachable to and detachable from the material-receiving module, and the molding module is attachable to and detachable from another molding module.

7. A molded article production method for producing a molded article including a cured resin (41), using molded article production system including: a mold (11) having at least a lower mold (10) and an upper mold (7) facing the lower mold (10); a cavity (12) provided in the lower mold (10); a bottom member (9) having an inner bottom surface (14) forming a bottom surface of the cavity (12); a circumferential member (8) having an inner circumferential surface (13) forming a side surface of the cavity (12); and a mold-driving mechanism provided for opening and closing the mold (11), the method including processes of filling the cavity (12) with a fluid resin (40), closing the mold (11), and forming the cured resin (41) by curing the fluid resin (40) in the cavity (12) while holding the mold (11) in a closed state, and the method comprising processes of:
elevating both the circumferential member (8) connected to a first auxiliary connecting member (20, 21, 22) and the bottom member (9) connected to a second auxiliary connecting member (24, 25, 26);
bringing the circumferential member (8) into contact with a member present on the upper mold (7) and further elevating the bottom member (9);
forming the cavity (12) by stopping the bottom member (9) at a predetermined position;
detaching an outer circumferential surface of the cured resin (41) from the inner circumferential surface (13) of the circumferential member (8) by lowering the circumferential member (8) while a top surface of the cured resin (41) is held by the inner bottom surface (14) of the bottom member (9), after the process of molding the cured resin (41);
detaching the top surface of the cured resin (41) from the inner bottom surface (14) of the bottom member (9) by lowering the bottom member (9) while the outer circumferential surface of the cured resin (41) is held by the inner circumferential surface (13) of the circumferential member (8), after the process of molding the cured resin (41);
lowering both the circumferential member (8) and the bottom member (9); and
removing the molded article,
charactrized by
the circumferential member (8) connected to an elevating platen (6) via the first auxiliary connecting member (20, 21, 22) is elevated or lowered by vertically driving the elevating platen (6) via a main connecting member (19) by means of a first driving mechanism (16) provided in a lower base (3) included in the molded article production system; and
the bottom member (9) connected to a second driving mechanism (23) via the second auxiliary connecting member (24, 25, 26) is elevated or lowered by means of a second driving mechanism (23) provided in the elevating platen (6).

8. A molded article production method for producing a molded article including a cured resin (41), using a molded article production system including: a mold (11) having at least a lower mold (10) and an upper mold (7) facing the lower mold (11); a cavity (12) provided in the lower mold (11); a bottom member (9) having an inner bottom surface (14) forming a bottom surface of the cavity (12); a circumferential member (8) having an inner circumferential surface (13) forming a side surface of the cavity (12); and a mold-driving mechanism provided for opening and closing the mold (11), the method including processes of filling the cavity (12) with a fluid resin (40), closing the mold (11), and forming the cured resin (41) by curing the fluid resin (40) in the cavity (12) while holding the mold (11) in a closed state, and the method comprising processes of:
elevating both the circumferential member (8) connected to a first auxiliary connecting member (20, 21, 22) and the bottom member (9) connected to a second auxiliary connecting member (24, 25, 26);
bringing the circumferential member (8) into contact with a member present on the upper mold (7) and further elevating the bottom member (9);
forming the cavity (12) by stopping the bottom member (9) at a predetermined position;
detaching an outer circumferential surface of the cured resin (41) from the inner circumferential surface (13) of the circumferential member (8) by lowering the circumferential member (8) while a top surface of the cured resin (41) is held by the inner bottom surface (14) of the bottom member (9), after the process of molding the cured resin (41);
detaching the top surface of the cured resin (41) from the inner bottom surface (14) of the bottom member (9) by lowering the bottom member (9) while the outer circumferential surface of the cured resin (41) is held by the inner circumferential surface (13) of the circumferential member (8), after the process of molding the cured resin (41);
lowering both the circumferential member (8) and the bottom member (9); and
removing the molded article,
charactrized by:
the bottom member (9) connected to an elevating platen (6) via the second auxiliary connecting member (24, 25, 26) is elevated or lowered by vertically driving the elevating platen (6) via a main connecting member (19) by means of a first driving mechanism (16) provided in a lower base (3) included in the molded article production system; and
the circumferential member (8) connected to a second driving mechanism (23) via the first auxiliary connecting member (20, 21, 22) is elevated or lowered by means of a second driving mechanism (23) provided in the elevating platen (6).

9. The molded article production method according to claim 7 or 8, further comprising:
a process of making a surface of the cured resin communicate with an external space outside the lower mold, after the process of molding the cured resin, using a communicating hole provided in the lower mold for allowing a mold surface forming the cavity to communicate with the external space, through an opening of the communicating hole provided on the mold surface forming the cavity.

10. The molded article production method according to claim 9, wherein:
the communicating hole is provided at a position where, after a gap begins to be formed between the mold surface on the circumferential member and the cured resin, the communicating hole allows the gap to communicate with the external space; and
a process of making the surface of the cured resin communicate with the external space is performed in the process of detaching the top surface of the cured resin.

11. The molded article production method according to claim 9, wherein:
the communicating hole is provided in a communicating member consisting of at least one of the circumferential member and the bottom member;
the lower mold is provided with
a pillar-shaped member inserted into the communicating hole in a longitudinally movable fashion,
a top surface formed on the pillar-shaped member and configured to fit in the opening, and
a widened portion formed in the communicating hole and extending toward the external space from a position receded from the opening along a communicating direction which is an extending direction of the communicating hole, the widened portion including a cross-sectional shape of the pillar-shaped member on a planer view and having a portion larger than that cross-sectional shape;
a process of closing the opening by means of the top surface by advancing the pillar-shaped member toward the cavity until the top surface reaches the opening is performed before the process of filling the cavity with the fluid resin is initiated; and
a process of making the surface of the cured resin communicate with the external space by retracting the pillar-shaped member in the communicating direction is performed after the process of molding the cured resin.

12. The molded article production method according to one of claims 7-11, wherein:
the molded article production system has a plurality of the molds;
the first auxiliary connecting member is connected to the circumferential member of each of the plurality of the molds; and
the second auxiliary connecting member is connected to the bottom member of each of the plurality of the molds.

13. The molded article production method according to one of claims 7-12, further comprising processes of:
forming a closed space by shielding a space which minimally includes the cavity from ambient air; and
depressurizing the closed space over a period of time which at least continues until the process of closing the mold is completed.

14. The molded article production method according to one of claims 7-13, further comprising processes of:
preparing a material-receiving module for receiving a resin material which is a raw material for the fluid resin; and
preparing at least one molding module having at least the mold and the mold-driving mechanism,
wherein:
the molding module is attachable to and detachable from the material-receiving module, and the molding module is attachable to and detachable from another molding module.

## Patentansprüche

1. Ein System zur Herstellung spritzgegossener Artikel umfassend: ein Formwerkzeug (11) mit wenigstens einem unteren Formwerkzeug (10) und einem oberen Formwerkzeug (7), das dem unteren Formwerkzeug (10) gegenüber liegt; einen Hohlraum (12), der in dem unteren Formwerkzeug (10) vorgesehen ist; ein Bodenelement (9) mit einer inneren Bodenoberfläche (14), die eine Bodenoberfläche (14) des Hohlraums (12) bildet; ein Umfangselement (8) mit einer inneren Umfangsoberfläche (13), die eine Seitenoberfläche des Hohlraums (12) bildet; und einen Formwerkzeugantriebsmechanismus zum Öffnen und Schließen des Formwerkzeugs (11), wobei das System ausgebildet ist, einen spritzgegossenen Artikel zu erstellen, der ein Harzformstoff (41) umfasst, das durch Aushärten eines flüssigen Harzes (40) gebildet wird, das den Hohlraum (12) füllt, während das Formwerkzeug (10) im geschlossenen Zustand gehalten wird, wobei das System aufweist:
eine untere Basis (3);
ein Trägerelement (4), das vertikal auf der unteren Basis (3) vorgesehen ist;
eine obere Basis (5), die in einem oberen Teil des Trägerelemets (4) vorgesehen ist und die der unteren Basis (3) gegenüber liegt;
eine Hebeplatte (6), die an einem mittleren Teil des Trägerelements (4) in einer vertikal beweglichen Art befestigt ist;
einen ersten Antriebsmechanismus (16), der in dem Formwerkzeugantriebsmechanismus enthalten ist und der an der untere Basis (3) befestigt ist;
einen zweiten Antriebsmechanismus (23), der in dem Formwerkzeugantriebsmechanismus enthalten ist und der an der Hebeplatte (6) befestigt ist;
ein Hauptverbindungselement (19), das den ersten Antriebsmechanismus (16) und die Hebeplatte (6) verbindet;
ein erstes Hilfsverbindungselement (20, 21, 22), das mit dem Umfangselement (8) verbunden ist; und
ein zweites Hilfsverbindungselement (24, 25, 26), das mit dem Bodenelement (9) verbunden ist,
wobei:
das obere Formwerkzeug (7) an der oberen Basis (5) befestigt ist;
das erste Hilfsverbindungselement (20, 21, 22) an die Hebeplatte (6) gebunden ist;
das zweite Hilfsverbindungselement (24, 25, 26) an den zweiten Antriebsmechanismus (23) gebunden ist;
das Umfangselement (8) wird durch die Hebeplatte (6) vertikal angetrieben, die durch den ersten Antriebsmechanismus (16) vertikal angetrieben wird; und
das Bodenelement (9) wird durch den zweiten Antriebsmechanismus (23) vertikal angetrieben
**gekennzeichnet durch**:
eine Kommunikationsbohrung (39), die in dem unteren Formwerkzeug (10) vorgesehen ist, damit eine den Hohlraum (12) bildende Formwerkzeugoberfläche mit einem Außenraum (38) außerhalb des unteren Formwerkzeugs (10) kommunizieren kann; und
eine Öffnung, die **durch** die Kommunikationsbohrung (39) auf der Formwerkzeugoberfläche, die den Hohlraum (12) bildet, gebildet ist,
die Kommunikationsbohrung (39) ist in einem Kommunikationselement vorgesehen, das wenigstens aus dem Umfangselement (8) oder dem Bodenelement (9) besteht;
das untere Formwerkzeug (10) umfasst ein säulenförmiges Element (46), das in die Kommunikationsbohrung (39) longitudinal beweglich eingeführt ist,
eine obere Oberfläche (48), die auf dem säulenförmigen Element (46) gebildet ist und ausgebildet ist, um in die Öffnung (45) zu passen, und
ein erweiterter Teil (49), der in der Kommunikationsbohrung (39) gebildet ist und der sich zum Außenraum hin ersteckt ausgehend von einer Position, die von der Öffnung (45) zurückgesetzt ist, entlang einer Kommunikationsrichtung, die einer Richtng der Kommunikationsbohrung (39) entspricht, der erweiterte Teil (49) umfasst eine Querschnittsform des säulenförmigen Elements (46) in einer ebenen Ansicht und hat einen größeren Anteil als diese Querschnittsform;
die obere Oberfläche (48) verschließt die Öffnung (45) wenn das säulenförmige Element (46) sich dem Hohlraum (12) nähert bis die obere Oberfläche die Öffnung (45) erreicht; und
die die Öffnung (45) und den ertweiterten Teil (49) aufweisende Kommunikationsbohrung (39) kommuniziert mit dem Außenraum wenn das säulenförmige Element (46) in Kommunikationsrichtung zurückgezogen wird.

2. Ein System zur Herstellung spritzgegossener Artikel umfassend: ein Formwerkzeug (11) mit wenigstens einem unteren Formwerkzeug (10) und einem oberen Formwerkzeug (7), das dem unteren Formwerkzeug (10) gegenüber liegt; einen Hohlraum (12), der in dem unteren Formwerkzeug (10) vorgesehen ist; ein Bodenelement (9) mit einer inneren Bodenoberfläche (14), die eine Bodenoberfläche (14) des Hohlraums (12) bildet; ein Umfangselement (8) mit einer inneren Umfangsoberfläche (13), die eine Seitenoberfläche des Hohlraums (12) bildet; und einen Formwerkzeugantriebsmechanismus zum Öffnen und Schließen des Formwerkzeugs (11), wobei das System ausgebildet ist, einen spritzgegossenen Artikel zu erstellen, der ein Harzformstoff (41) umfasst, das durch Aushärten eines flüssigen Harzes (40) gebildet wird, das den Hohlraum (12) füllt während das Formwerkzeug (10) im geschlossenen Zustand gehalten wird, wobei das System aufweist:
eine untere Basis (3);
ein Trägerelement (4), das vertikal auf der unteren Basis (3) vorgesehen ist;
eine obere Basis (5), die in einem oberen Teil des Trägerelemets (4) vorgesehen ist und die der unteren Basis (3) gegenüber liegt;
eine Hebeplatte (6), die an einem mittleren Teil des Trägerelements (4) in einer vertikal beweglichen Art befestigt ist;
einen ersten Antriebsmechanismus (16), der in dem Formwerkzeugantriebsmechanismus enthalten ist und der an der untere Basis (3) befestigt ist;
einen zweiten Antriebsmechanismus (23), der in dem Formwerkzeugantriebsmechanismus enthalten ist und der an der Hebeplatte (6) befestigt ist;
ein Hauptverbindungselement (19), das den ersten Antriebsmechanismus (16) und die Hebeplatte (6) verbindet;
ein erstes Hilfsverbindungselement (20, 21, 22), das mit dem Umfangselement (8) verbunden ist; und
ein zweites Hilfsverbindungselement (24, 25, 26), das mit dem Bodenelement (9) verbunden ist,
wobei:
das obere Formwerkzeug (7) an der oberen Basis (5) befestigt ist;
das erste Hilfsverbindungselement (20, 21, 22) an den zweiten Antriebsmechanismus (23) gebunden ist;
das zweite Hilfsverbindungselement (24, 25, 26); an die Hebeplatte (6) gebunden ist;
das Bodenelement (9) wird durch die Hebeplatte (6) vertikal angetrieben, die durch den ersten Antriebsmechanismus (16) vertikal angetrieben wird; und
das Umfangselement (8) wird durch den zweiten Antriebsmechanismus (23) vertikal angetrieben
**gekennzeichnet durch**:
eine Kommunikationsbohrung (39), die in dem unteren Formwerkzeug (10) vorgesehen ist, damit eine den Hohlraum (12) bildende Formwerkzeugoberfläche mit einem Außenraum (38) außerhalb des unteren Formwerkzeugs (10) kommunizieren kann; und
eine Öffnung, die **durch** die Kommunikationsbohrung (39) auf der Formwerkzeugoberfläche, die den Hohlraum (12) bildet, gebildet ist,
die Kommunikationsbohrung (39) ist in einem Kommunikationselement vorgesehen, das wenigstens aus dem Umfangselement (8) oder dem Bodenelement (9) besteht;
das untere Formwerkzeug (10) umfasst ein säulenförmiges Element (46), das in die Kommunikationsbohrung (39) longitudinal beweglich eingeführt ist,
eine obere Oberfläche (48), die auf dem säulenförmigen Element (46) gebildet ist und ausgebildet ist, um in die Öffnung (45) zu passen, und
ein erweiterter Teil (49), der in der Kommunikationsbohrung (39) gebildet ist und der sich zum Außenraum hin ersteckt ausgehend von einer Position, die von der Öffnung (45) zurückgesetzt ist, entlang einer Kommunikationsrichtung, die einer Richtng der Kommunikationsbohrung (39) entspricht, der erweiterte Teil (49) umfasst eine Querschnittsform des säulenförmigen Elements (46) in einer ebenen Ansicht und hat einen größeren Anteil als diese Querschnittsform;
die obere Oberfläche (48) verschließt die Öffnung (45) wenn das säulenförmige Element (46) sich dem Hohlraum (12) nähert bis die obere Oberfläche die Öffnung (45) erreicht; und
die die Öffnung (45) und den ertweiterten Teil (49) aufweisende Kommunikationsbohrung (39) kommuniziert mit dem Außenraum wenn das säulenförmige Element (46) in Kommunikationsrichtung zurückgezogen wird.

3. Das System zur Herstellung spritzgegossener Artikel nach Anspruch 1 oder 2, wobei:
die Kommunikationsbohrung in dem Umfangselement vorgesehen ist; und
die Kommunikationsbohrung an einer Position vorgesehen ist, an der, nachdem eine Lücke zwischen der Formwerkzeugoberfläche des Umfangselements und dem Harzformstoff beginnt zu entstehen, die Kommunikationsbohrung der Lücke eine Kommunikation mit dem Außenraum erlaubt.

4. Das System zur Herstellung spritzgegossener Artikel nach einem der Ansprüche 1-3, wobei:
eine Vielzahl von Formwerkzeugen bereitgestellt ist;
das erste Hilfsverbindungselement mit dem Umfangselement jedes der Vielzahl der Formwerkzeuge verbunden ist; und
das zweite Hilfsverbindungselement mit dem Bodenelement jedes der Vielzahl der Formwerkzeuge verbunden ist.

5. Das System zur Herstellung spritzgegossener Artikel nach einem der Ansprüche 1-4, weiter umfassend:
ein Umgebungsluftabschirmelement, das zwischen der oberen Basis und dem ersten Hilfsverbindungselement vorgesehen ist, so dass ein Raum, der minimal den Hohlraum umfasst, ein geschlossener und von Umgebungsluft abgeschirmter Raum wird;
wenigstens ein Dichtelement, das zwischen der obereren Basis und dem ersten Hilfsverbindungselement vorgesehen ist; und
ein mit dem geschlossenen Raum verbundenes Druckentlastungsmittel zum Druckentlasten des geschlossenen Raums.

6. Das System zur Herstellung spritzgegossener Artikel nach eniem der Ansprüche 1-5, weiter umfassend:
ein materialaufnehmendes Modul zum Aufnehmen von Gießmaterial, das ein Rohmaterial für das flüssige Harz ist; und
wenigstens ein Spritzgussmodul mit wenigstens einem Formwerkzeug und dem Formwerkzeugantriebsmechanismus,
wobei das Spritzgussmodul an das materialaufnehmende Modul anbringbar und von diesem lösbar ist, und das Spritzgussmodul an andere Spritzgussmodule anbringbar und von diesen lösbar ist.

7. Ein Spritzgussverfahren zur Herstellung spritzgegossener Artikel umfassend einen Harzformstoff (41), das ein System zur Herstellung spritzgegossener Artikel verwendet, umfassend: ein Formwerkzeug (11) mit wenigstens einem unteren Formwerkzeug (10) und einem oberen Formwerkzeug (7), das dem unteren Formwerkzeug (10) gegenüber liegt; einen Hohlraum (12), der in dem unteren Formwerkzeug (10) vorgesehen ist; ein Bodenelement (9) mit einer inneren Bodenoberfläche (14), die eine Bodenoberfläche (14) des Hohlraums (12) bildet; ein Umfangselement (8) mit einer inneren Umfangsoberfläche (13), die eine Seitenoberfläche des Hohlraums (12) bildet; und einen Formwerkzeugantriebsmechanismus zum Öffnen und Schließen des Formwerkzeugs (11), wobei das Verfahren umfasst, das Füllen des Hohlraums (12) mit einem flüssigen Harz (40), Schließen des Formwerkzeugs (11) und Formen des Harzformstoffs (41) durch Aushärten des flüssigen Harzes (40) in dem Hohlraum (12) während das Formwerkzeug (10) im geschlossenen Zustand gehalten wird, wobei das Verfahren aufweist:
Heben des an ein erstes Hilfsverbindungselement (20, 21, 22) gebundenen Umfangselements (8) und des an ein zweites Hilfsverbindungselement (24, 25, 26) gebundenes Bodenelement (9);
Bringen des Umfangselements (8) in Kontakt mit einem Element, das auf dem oberen Formwerkzeug vorhanden ist, und weiteres Heben des Bodenelements (9);
Bilden des Hohlraums (12) durch Stoppen des Bodenelements (9) an einer vorbestimmten Position;
Lösen der äußeren Umfangsoberfläche des Harzformstoffs (41) von der inneren Umfangsoberfläche (13) des Umfangselements (8) durch Senken des Umfangselements (8) während die obere Oberfläche des Harzformstoffs (41) durch die innere Bodenoberfläche (14) des Bodenelements (9) gehalten wird nach dem Prozess des Gießens des Harzformstoffs (41);
Lösen der oberen Oberfläche des Harzformstoffs (41) von der inneren Bodenfläche (14) des Bodenelements (9) durch Senken des Bodenelements (9) während die äußere Umfangsoberfläche des Harzformstoffs (41) durch die innere Umfangsoberfläche (13) des Umfangselements (8) gehalten wird nach dem Prozess des Gießens des Harzformstoffs (41);
Senken des Umfangselements (8) und des Bodenelements (9); und
Entnehmen des spritzgegossenen Artikels,
**dadurch gekennzeichnet,**
**dass** das mittels des ersten Hilfsverbindungselements (20, 21, 22) an eine Hebeplatte (6) gebundene Umfangselement (8) gehoben und abgesenkt wird durch vertikales Antreiben der Hebeplatte (6) durch ein Hauptverbindungselement (19) mittels eines ersten Antriebsmechanismus (16), der in einer unteren Basis (3) vorgesehen ist, die in dem System zum Herstellen spritzgegossener Artikel enthalten ist; und
**dass** das mittels des zweiten Hilfsverbindungselements (24, 25, 26) an einen zweiten Antriebsmechanismus (23) gebundene Bodenelement (9) gehoben und gesenkt wird durch einen zweiten Antriebsmechanismus (23), der in der Hebeplatte (6) vorgesehen ist.

8. Ein Spritzgussverfahren zur Herstellung spritzgegossener Artikel umfassend einen Harzformstoff (41), das ein System zur Herstellung spritzgegossener Artikel verwendet, umfassend: ein Formwerkzeug (11) mit wenigstens einem unteren Formwerkzeug (10) und einem oberen Formwerkzeug (7), das dem unteren Formwerkzeug (10) gegenüber liegt; einen Hohlraum (12), der in dem unteren Formwerkzeug (10) vorgesehen ist; ein Bodenelement (9) mit einer inneren Bodenoberfläche (14), die eine Bodenoberfläche (14) des Hohlraums (12) bildet; ein Umfangselement (8) mit einer inneren Umfangsoberfläche (13), die eine Seitenoberfläche des Hohlraums (12) bildet; und einen Formwerkzeugantriebsmechanismus zum Öffnen und Schließen des Formwerkzeugs (11), wobei das Verfahren umfasst, das Füllen des Hohlraums (12) mit einem flüssigen Harz (40), Schließen des Formwerkzeugs (11) und Formen des Harzformstoffs (41) durch Aushärten des flüssigen Harzes (40) in dem Hohlraum (12) während das Formwerkzeug (10) im geschlossenen Zustand gehalten wird, wobei das Verfahren aufweist:
Heben des an ein erstes Hilfsverbindungselement (20, 21, 22) gebundenen Umfangselements (8) und Heben des an ein zweites Hilfsverbindungselement (24, 25, 26) gebundenes Bodenelement (9);
Bringen des Umfangselements (8) in Kontakt mit einem Element, das auf dem oberen Formwerkzeug vorhanden ist, und weiteres Heben des Bodenelements (9);
Bilden des Hohlraums (12) durch Stoppen des Bodenelements (9) an einer vorbestimmten Position;
Lösen der äußeren Umfangsoberfläche des Harzformstoffs (41) von der inneren Umfangsoberfläche (13) des Umfangselements (8) durch Senken des Umfangselements (8) während die obere Oberfläche des Harzformstoffs (41) durch die innere Bodenoberfläche (14) des Bodenelements (9) gehalten wird nach dem Prozess des Gießens des Harzformstoffs (41);
Lösen der oberen Oberfläche des Harzformstoffs (41) von der inneren Bodenfläche (14) des Bodenelements (9) durch Senken des Bodenelements (9) während die äußere Umfangsoberfläche des Harzformstoffs (41) durch die innere Umfangsoberfläche (13) des Umfangselements (8) gehalten wird nach dem Prozess des Gießens des Harzformstoffs (41);
Senken des Umfangselements (8) und des Bodenelements (9); und
Entnehmen des spritzgegossenen Artikels,
**dadurch gekennzeichnet,**
**dass** das mittels des zweiten Hilfsverbindungselements (20, 21, 22) an eine Hebeplatte (6) gebundene Bodenelement (9) gehoben und abgesenkt wird durch vertikales Antreiben der Hebeplatte (6) durch ein Hauptverbindungselement (19) mittels eines ersten Antriebsmechanismus (16), der in einer unteren Basis (3) vorgesehen ist, die in dem System zum Herstellen spritzgegossener Artikel enthalten ist; und
**dass** das mittels des ersten Hilfsverbindungselements (24, 25, 26) an einen zweiten Antriebsmechanismus (23) gebundene Umfangselement (8) gehoben und gesenkt wird durch einen zweiten Antriebsmechanismus (23), der in der Hebeplatte (6) vorgesehen ist.

9. Das Spritzgussverfahren zur Herstellung spritzgegossener Artikel nach Anspruch 7 oder 8, weiter umfassend:
einen Prozess, der es ermöglicht einer Oberfläche des Harzformstoffs mit einem Außenraum außerhalb des unteren Formwerkzeugs zu kommunizieren, nach dem Prozess des Formgießens des Harzformstoffs, indem eine Kommunikationsbohrung verwendet wird, die in dem unteren Formwerkzeug vorgesehen ist, um es einer den Hohlraum formenden Formwerkzeugoberfläche zu ermöglichen, durch eine Öffnung der Kommunikationsbohrung, die in der den Hohlraum formenden Formwerkzeugoberfläche vorgesehen ist, mit dem Außenraum zu kommunizieren.

10. Das Spritzgussverfahren zur Herstellung spritzgegossener Artikel nach Anspruch 9, wobei:
die Kommunikationsöffnung an einer Position vorgesehen ist, an der, nachdem eine Lücke zwischen der Formwerkzeugoberfläche des Umfangselements und dem Harzformstoff beginnt zu entstehen, die Kommunikationsbohrung der Lücke eine Kommunikation mit dem Außenraum erlaubt.

11. Das Spritzgussverfahren zur Herstellung spritzgegossener Artikel nach Anspruch 9, wobei:
die Kommunikationsbohrung in einem Kommunikationselement vorgesehen ist, das aus wenigstens dem Umfangselement oder dem Bodenelement (9) besteht;
das untere Formwerkzeug umfasst
ein säulenförmiges Element, das in die Kommunikationsbohrung longitudinal beweglich eingeführt ist,
eine obere Oberfläche, die auf dem säulenförmigen Element gebildet ist und ausgebildet ist, um in die Öffnung zu passen, und
ein erweiterter Teil, der in der Kommunikationsbohrung gebildet ist und der sich zum Außenraum hin ersteckt ausgehend von einer Position, die von der Öffnung zurückgesetzt ist, entlang einer Kommunikationsrichtung, die einer Richtung der Kommunikationsbohrung entspricht, der erweiterte Teil umfasst eine Querschnittsform des säulenförmigen Elements in einer ebenen Ansicht und hat einen größeren Anteil als diese Querschnittsform;
ein Prozess des Schließens der Öffnung durch die obere Oberfläche durch Annähern des säulenförmigen Elements an den Hohlraum bis die obere Oberfläche die Öffnung erreicht, bevor der Prozess des Füllens des Hohlraums mit dem flüssigen Harz beginnt; und
ein Prozess des Ermöglichens der Oberfläche des Harzformstoffs mit dem Außenraum zu kommunizieren durch Zurückziehen des säulenförmigen Elements in Kommunikationsrichtung, nach dem Prozess des Spritzgießens des Harzformstoff.

12. Das Spritzgussverfahren zur Herstellung spritzgegossener Artikel nach einem der Ansprüche 7-11, wobei:
das System zur Herstellung spritzgegossener Artikel eine Vielzahl von Formwerkzeugen umfasst;
das erste Hilfsverbindungselement mit dem Umfangselement jedes der Vielzahl der Formwerkzeuge verbunden ist; und
das zweite Hilfsverbindungselement mit dem Bodenelement jedes der Vielzahl der Formwerkzeuge verbunden ist.

13. Das Spritzgussverfahren zur Herstellung spritzgegossener Artikel nach einem der Ansprüche 7-12, weiter umfasend Prozesse des:
Formens eines abgeschlossenen Raums durch Abschirmen eines Raums, der minimal den Hohlraum umfasst, von Umgebungsluft;
Druckentlastens des abgeschlossenen Raums über einen Zeitraum, der wenigstens so lange dauert bis der Prozess des Schließens des Formwerkzeugs abgeschlossen ist.

14. Das Spritzgussverfahren zur Herstellung spritzgegossener Artikel nach einem der Ansprüche 7-13, weiter umfassend Prozesse des:
Vorbereitens eines materialaufnehmendes Modul zum Aufnehmen von Gießmaterial, das ein Rohmaterial für das flüssige Harz ist; und
Vorbereiten wenigstens eines Spritzgussmoduls, das wenigstens ein Formwerkzeug und den Formwerkzeugantriebsmechanismus aufweist,
wobei:
das Spritzgussmodul an das materialaufnehmende Modul anbringbar und von diesem lösbar ist, und das Spritzgussmodul an andere Spritzgussmodule anbringbar und von diesen lösbar ist.

## Revendications

1. Système de production d'articles moulés incluant : un moule (11) ayant au moins un moule inférieur (10) et un moule supérieur (7) en face du moule inférieur (10) ; une cavité (12) prévue dans le moule inférieur (10) ; un élément de fond (9) ayant une surface de fond intérieure (14) formant une surface de fond (14) de la cavité (12) ; et un élément circonférentiel (8) ayant une surface circonférentielle intérieure (13) formant une surface latérale de la cavité (12) ; et un mécanisme d'entraînement de moule prévu pour ouvrir et fermer le moule (11), le système étant configuré pour produire un article moulé incluant une résine durcie (41) formée en faisant durcir une résine fluide (40) remplissant la cavité (12) tout en maintenant le moule (10) dans un état fermé, et le système comprenant :
une base inférieure (3) ;
un élément de support (4) prévu verticalement sur la base inférieure (3) ;
une base supérieure (5) prévue dans une portion supérieure de l'élément de support (4) et en face de la base inférieure (3) ;
un plateau élévateur (6) monté sur une portion médiane de l'élément de support (4) d'une manière verticalement déplaçable ;
un premier mécanisme d'entraînement (16) inclus dans le mécanisme d'entraînement de moule et attaché à la base inférieure (3) ;
un second mécanisme d'entraînement (23) inclus dans le mécanisme d'entraînement de moule et attaché au plateau élévateur (6) ;
un élément de connexion principal (19) qui connecte le premier mécanisme d'entraînement (16) et le plateau élévateur (6) ;
un premier élément de connexion auxiliaire (20, 21, 22) connecté à l'élément circonférentiel (8) ; et
un second élément de connexion auxiliaire (24, 25, 26) connecté à l'élément de fond (9),
dans lequel :
le moule supérieur (7) est attaché à la base supérieure (5) ;
le premier élément de connexion auxiliaire (20, 21, 22) est connecté au plateau élévateur (6) ;
le second élément de connexion auxiliaire (24, 25, 26) est connecté au second mécanisme d'entraînement (23) ;
l'élément circonférentiel (8) est entraîné verticalement par le plateau élévateur (6) qui est verticalement entraîné par le premier mécanisme d'entraînement (16) ; et
l'élément de fond (9) est entraîné verticalement par le second mécanisme d'entraînement (23),
**caractérisé par**
un trou de communication (39) prévu dans le moule inférieur (10), pour permettre la communication d'une surface du moule formant la cavité (12) avec un espace externe (38) à l'extérieur du moule inférieur (10) ; et
une ouverture formée par le trou de communication (39) sur la surface du moule formant la cavité (12),
le trou de communication (39) est prévu dans un élément de communication constitué de l'un au moins parmi l'élément circonférentiel (8) et l'élément de fond (9)
le moule inférieur (10) est doté d'un élément en forme de pilier (46) inséré dans le trou de communication (39) d'une manière longitudinalement déplaçable,
une surface supérieure (48) formée sur l'élément en forme de pilier (46) et configurée pour se loger dans l'ouverture (45), et
une portion élargie (49) formée dans le trou de communication (39) et s'étendant vers l'espace externe depuis une position en retrait vis-à-vis de l'ouverture (45) le long d'une direction de communication qui est une direction d'extension du trou de communication (39), la portion élargie (49) incluant une forme de section transversale de l'élément en forme de pilier (46) sur une vue en plan et ayant une portion plus grande que celle de la forme de section transversale ;
la surface supérieure (48) ferme l'ouverture (45) quand l'élément en forme de pilier (46) est avancé vers la cavité (12) jusqu'à ce que la surface supérieure atteigne l'ouverture (45) ; et
le trou de communication (39) incluant l'ouverture (45) et la portion élargie (49) communique avec l'espace externe quand l'élément en forme de pilier (46) est rétracté dans la direction de communication.

2. Système de production d'articles moulés incluant : un moule (11) ayant au moins un moule inférieur (10) et un moule supérieur (7) en face du moule inférieur (10) ; une cavité (12) prévue dans le moule inférieur (10) ; un élément de fond (9) ayant une surface de fond intérieure (14) formant une surface de fond de la cavité (12) ; un élément circonférentiel (8) ayant une surface circonférentielle intérieure (13) formant une surface latérale de la cavité (12) ; et un mécanisme d'entraînement de moule prévu pour ouvrir et fermer le moule (11), le système étant configuré pour produire un article moulé incluant une résine durcie (41) formée en faisant durcir une résine fluide (40) remplissant la cavité (12) tout en maintenant le moule (10) dans un état fermé, et le système comprenant :
une base inférieure (3) ;
un élément de support (4) prévu verticalement sur la base inférieure (3) ;
une base supérieure (5) prévue dans une portion supérieure de l'élément de support (4) et en face de la base inférieure (3) ;
un plateau élévateur (6) monté sur une portion médiane de l'élément de support (4) de manière verticalement déplaçable ;
un premier mécanisme d'entraînement (16) inclus dans le mécanisme d'entraînement de moule et attaché à la base inférieure (3) ;
un second mécanisme d'entraînement (23) inclus dans le mécanisme d'entraînement de moule et attaché au plateau élévateur (6) ;
un élément de connexion principal (19) qui connecte le premier mécanisme d'entraînement (16) et le plateau élévateur (6) ;
un premier élément de connexion auxiliaire (20, 21, 22) connecté à l'élément circonférentiel (8) ; et
un second élément de connexion auxiliaire (24, 25, 26) connecté à l'élément de fond (9),
dans lequel :
le moule supérieur (7) est attaché à la base supérieure (5) ;
le premier élément de connexion auxiliaire (20, 21, 22) est connecté au second mécanisme d'entraînement (23) ;
le second élément de connexion auxiliaire (24, 25, 26) est connecté au plateau élévateur (6) ;
l'élément de fond (9) est entraîné verticalement par le plateau élévateur (6) qui est entraîné verticalement par le premier mécanisme d'entraînement (16) ; et
l'élément circonférentiel (8) est entraîné verticalement par le second mécanisme d'entraînement (23),
**caractérisé par** :
un trou de communication (39) prévu dans le moule inférieur (10), pour permettre l'communication d'une surface du moule formant la cavité (12) avec un espace externe (38) à l'extérieur du moule inférieur (10) ; et
une ouverture formée par le trou de communication (39) sur la surface du moule formant la cavité (12),
le trou de communication (39) est prévu dans un élément de communication constitué de l'un au moins parmi l'élément circonférentiel (8) et un élément de fond (9) ;
le moule inférieur (10) est doté d'un élément en forme de pilier (46) inséré dans le trou de communication (39) d'une manière longitudinalement déplaçable,
une surface supérieure (48) formée sur l'élément en forme de piliers (46) est configurée pour se loger dans l'ouverture (45), et
une portion élargie (49) formée dans le trou de communication (39) et s'étendant vers l'espace externe depuis une position en retrait depuis l'ouverture (45) le long d'une direction de communication qui est une direction d'extension du trou de communication (39), la portion élargie (49) incluant une forme de section transversale de l'élément en forme de pilier (46) sur une vue en plan et ayant une portion plus grande que celle de la forme de section transversale ;
la surface supérieure (48) ferme l'ouverture (45) quand l'élément en forme de pilier (46) est avancé vers la cavité (12) jusqu'à ce que la surface supérieure atteigne l'ouverture (45) ; et
le trou de communication (39) incluant l'ouverture (45) et la portion élargie (49) communique avec l'espace externe quand l'élément en forme de pilier (46) est rétracté dans la direction de communication.

3. Système de production d'articles moulés selon la revendication 1 ou 2, dans lequel
le trou de communication est prévu dans l'élément circonférentiel ; et
le trou de communication est prévu à une position à laquelle, après qu'un intervalle commence à se former entre la surface du moule sur l'élément circonférentiel et la résine durcie, le trou de communication permet que l'intervalle communique avec l'espace externe.

4. Système de production d'articles moulés selon l'une des revendications 1 à 3, dans lequel
il est prévu une pluralité de moules ;
le premier élément de connexion auxiliaire est connecté à l'élément circonférentiel de chacun de la pluralité de moules ; et
le second élément de connexion auxiliaire est connecté à l'élément de fond de chacun de la pluralité de moules.

5. Système de production d'articles moulés selon l'une des revendications 1 à 4, comprenant en outre :
un élément d'isolation vis-à-vis de l'air ambiant prévu entre la base supérieure et le premier élément de connexion auxiliaire de telle sorte qu'un espace, qui inclut de façon minimale la cavité, devienne un espace fermé isolé vis-à-vis de l'air ambiant ;
au moins un élément d'étanchement prévu entre la base supérieure et le premier élément de connexion auxiliaire ; et
un moyen de dépressurisation connecté à l'espace fermé, pour dépressuriser l'espace fermé.

6. Système de production d'articles moulés selon l'une des revendications 1 à 5, comprenant en outre :
un module de réception de matériau pour recevoir un matériau à base de résine qui est un matériau brut pour une résine fluide ; et
au moins un module de moulage ayant au moins le moule et le mécanisme d'entraînement de moule,
dans lequel le module de moulage est susceptible d'être attaché à et détaché depuis le module de réception de matériau, et le module de moulage est susceptible d'être attaché à et détaché depuis un autre module de moulage.

7. Procédé de production d'articles moulés pour produire un article moulé incluant une résine durcie (41), en utilisant un système de production d'articles moulés incluant : un moule (11) ayant au moins un moule inférieur (10) et un moule supérieur (7) en face du moule inférieur (10) ; une cavité (12) prévue dans le moule inférieur (10) ; un élément de fond (9) ayant une surface de fond intérieure (14) formant une surface de fond de la cavité (12) ; un élément circonférentiel (8) ayant une surface circonférentielle intérieure (13) formant une surface latérale de la cavité (12) ; et un mécanisme d'entraînement de moule prévu pour ouvrir et fermer le moule (11), le procédé incluant les processus consistant à remplir la cavité (12) avec une résine fluide (40), à fermer le moule (11), et à former la résine durcie (41) en faisant durcir la résine fluide (40) dans la cavité (12) tout en maintenant le moule (11) dans un état fermé, le procédé comprenant les processus consistant à :
élever à la fois l'élément circonférentiel (8) connecté à un premier élément de connexion auxiliaire (20, 21, 22) et l'élément de fond (9) connecté à un second élément de connexion auxiliaire (24, 25, 26) ;
amener l'élément circonférentiel (8) jusqu'en contact avec un élément présent sur le moule supérieur (7) et continuer à élever l'élément de fond (9) ;
former la cavité (12) en arrêtant l'élément de fond (9) à une position prédéterminée ;
détacher une surface circonférentielle extérieure de la résine durcie (41) depuis la surface circonférentielle intérieure (13) de l'élément circonférentiel (8) en abaissant l'élément circonférentiel (8) alors qu'une surface supérieure de la résine durcie (41) est maintenue par la surface de fond intérieure (12) de l'élément de fond (9), après le processus de moulage de la résine durcie (41) ;
détacher la surface supérieure de la résine durcie (41) depuis la surface de fond intérieure (14) de l'élément de fond (9) en abaissant l'élément de fond (9) alors que la surface circonférentielle extérieure de la résine durcie (41) est maintenue par la surface circonférentielle intérieure (13) de l'élément circonférentiel (8), après le processus de moulage de la résine durcie (41) ;
abaisser à la fois l'élément circonférentiel (8) et l'élément de fond (9) ; et
enlever l'article moulé,
**caractérisé par** les opérations suivantes :
l'élément circonférentiel (8) connecté à un plateau élévateur (6) via le premier élément de connexion auxiliaire (20, 21, 22) est élevé ou abaissé en entraînant verticalement le plateau élévateur (6) via un élément de connexion principal (19) au moyen d'un premier mécanisme d'entraînement (16) prévu dans une base inférieure (3) incluse dans le système de production d'articles moulés ; et
l'élément de fond (9) connecté à un second mécanisme d'entraînement (23) via le second élément de connexion auxiliaire (24, 25, 26) est élevé ou abaissé au moyen d'un second mécanisme d'entraînement (23) prévu dans le plateau élévateur (6).

8. Procédé de production d'articles moulés pour produire un article moulé incluant une résine durcie (41), en utilisant un système de production d'articles moulés incluant : un moule (11) ayant au moins un moule inférieur (10) et un moule supérieur (7) en face du moule inférieur (11) ; une cavité (12) prévue dans le moule inférieur (11) ; un élément de fond (9) ayant une surface de fond intérieure (14) formant une surface de fond de la cavité (12) ; un élément circonférentiel (8) ayant une surface circonférentielle intérieure (13) formant une surface latérale de la cavité (12) ; et un mécanisme d'entraînement de moule prévu pour ouvrir et fermer le moule (11), le procédé incluant les processus consistant à remplir la cavité (12) avec une résine fluide (40), à fermer le moule (11), et à former la résine durcie (41) en faisant durcir la résine fluide (40) dans la cavité (12) tout en maintenant le moule (11) dans un état fermé, le procédé comprenant les processus consistant à :
élever à la fois l'élément circonférentiel (8) connecté à un premier élément de connexion auxiliaire (20, 21, 22) et l'élément de fond (9) connecté à un second élément de connexion auxiliaire (24, 25, 26) ;
amener l'élément circonférentiel (9) jusqu'en contact avec un élément présent sur le moule supérieur (7) et continuer à élever l'élément de fond (9) ;
former la cavité (12) en arrêtant l'élément de fond (9) à une position prédéterminée ;
détacher une surface circonférentielle extérieure de la résine durcie (41) depuis la surface circonférentielle intérieure (13) de l'élément circonférentiel (8) en abaissant l'élément circonférentiel (8) alors qu'une surface supérieure de la résine durcie (41) est maintenue par la surface de fond intérieur (14) de l'élément de fond (9), après le processus de moulage de la résine durcie (41) ;
détacher la surface supérieure de la résine durcie (41) depuis la surface de fond intérieure (14) de l'élément de fond (9) en abaissant l'élément de fond (9) alors que la surface circonférentielle extérieure de la résine durcie (41) est maintenue par la surface circonférentielle intérieure (13) de l'élément circonférentiel (8), après le processus de moulage de la résine durcie (41) ;
abaisser à la fois l'élément circonférentiel (8) et l'élément de fond (9) ; et
enlever l'article moulé,
**caractérisé par** les opérations suivantes :
l'élément de fond (9) connecté à un plateau élévateur (6) via le second élément de connexion auxiliaire (24, 25, 26) est élevé ou abaissé en entraînant verticalement le plateau élévateur (6) via un élément de connexion principal (19) au moyen d'un premier mécanisme d'entraînement (16) prévu dans une base inférieure (3) incluse dans le système de production d'articles moulés ; et
l'élément circonférentiel (8) connecté à un second mécanisme d'entraînement (23) via le premier élément de connexion auxiliaire (20, 21, 22) est élevé ou abaissé au moyen d'un second mécanisme d'entraînement (23) prévu dans le plateau élévateur (6).

9. Procédé de production d'articles moulés selon la revendication 7 ou 8, comprenant en outre
un processus pour amener une surface de la résine durcie à communiquer avec un espace externe à l'extérieur du moule inférieur, après le processus de moulage de la résine durcie, en utilisant un trou de communication prévu dans le moule inférieur pour permettre la communication d'une surface du moule forme la cavité avec l'espace externe, à travers une ouverture du trou de communication prévue sur la surface du moule formant la cavité.

10. Procédé de production d'articles moulés selon la revendication 9, dans lequel :
le trou de communication est prévu à une position à laquelle, après qu'un intervalle commence à se former entre la surface du moule sur l'élément circonférentiel et la résine durcie, le trou de communication permet à l'intervalle de communiquer avec l'espace externe ; et
un processus pour amener la surface de la résine durcie à communiquer avec l'espace externe est exécuté dans le processus consistant à détacher la surface supérieure de la résine durcie.

11. Procédé de production d'articles moulés selon la revendication 9, dans lequel :
le trou de communication est prévu dans un élément de communication constitué de l'un au moins de l'élément circonférentiel et de l'élément de fond ;
le moule inférieur est doté
d'un élément en forme de pilier inséré dans le trou de communication d'une manière longitudinalement déplaçable,
d'une surface supérieure formée sur l'élément en forme de pilier et configurée pour se loger dans l'ouverture, et
d'une portion élargie formée dans le trou de communication et s'étendant vers l'espace externe depuis une position en retrait depuis l'ouverture le long d'une direction de communication qui est une direction d'extension du trou de communication, la portion élargie incluant une forme de section transversale de l'élément en forme de pilier sur une vue en plan et ayant une portion plus grande que celle de la forme de section transversale ;
un processus consistant à fermer l'ouverture au moyen de la surface supérieure en avançant l'élément en forme de pilier vers la cavité jusqu'à ce que la surface supérieure atteigne l'ouverture, est exécuté avant de démarrer le processus de remplissage de la cavité avec la résine fluide ; et
un processus pour amener la surface de la résine durcie à communiquer avec l'espace externe par rétraction de l'élément en forme de pilier dans la direction de communication est exécuté après le processus de moulage de la résine durcie.

12. Procédé de production d'articles moulés selon l'une des revendications 7 à 11, dans lequel :
le système de production d'articles moulés comprend une pluralité de moules ;
le premier élément de connexion auxiliaire est connecté à l'élément circonférentiel de chacun de la pluralité de moules ; et
le second élément de connexion auxiliaire est connecté à l'élément de fond de chacun de la pluralité de moules.

13. Procédé de production d'articles moulés selon l'une des revendications 7 à 12, comprenant en outre les processus consistant à :
former un espace fermé en isolant un espace qui inclut de façon minimale la cavité vis-à-vis de l'air ambiant ; et
dépressuriser l'espace fermé sur une période temporelle qui continue au moins jusqu'à ce que le processus de fermeture du moule soit terminé.

14. Procédé de production d'articles moulés selon l'une des revendications 7 à 13, comprenant en outre les processus consistant à :
préparer un module de réception de matériau pour recevoir un matériau à base de résine qui est un matériau brut pour la résine fluide ; et
préparer au moins un module de moulage ayant au moins le moule et le mécanisme d'entraînement de moule,
dans lequel
le module de moulage est susceptible d'être attaché à et détaché depuis le module de réception de matériau, et le module de moulage est susceptible d'être attaché à et détaché depuis un autre module de moulage.
